# EUROPEAN PATENT APPLICATION

(11) **EP 1 278 351 A2**
(43) Date of publication of application: **22.01.2003**
(21) Application number: 02015592.5
(22) Date of filing: 15.07.2002
(51) Int. Cl.: H04L 29/06

(54) **Mobile communication system**

(30) Priority: 17.07.2001 JP 2001216562; 26.09.2001 JP 2001294381; 19.06.2002 JP 2002179024; 19.06.2002 JP 2002179025
(71) Applicant: MITSUBISHI MATERIALS CORPORATION, Chiyoda-ku, Tokyo (JP)
(72) Inventor: Tari, Kazuyoshi, Mitsubishi Materials Corp., 1-8-10, Kichijyojihoncho Musashino Tokyo (JP); Matsuno, Yoshihiro, Mitsubishi Materials Corp., 1-8-10, Kichijyojihoncho Musashino Tokyo (JP); Nagira, Tsumoru, Mitsubishi Materials Corp., 1-12-14, Koishikawa, Bunkyo-ku, Tokyo (JP); Hosobuchi, Kenichiro, Mitsubishi Materials Corp., 1-12-14, Koishikawa, Bunkyo-ku, Tokyo (JP); Shigeta, Hirotake, Mitsubishi Materials Corp., 1-12-14, Koishikawa, Bunkyo-ku, Tokyo (JP); Kokubun, Shigeki, Mitsubishi Materials Corp., 1-12-14, Koishikawa, Bunkyo-ku, Tokyo (JP); Chiba, Toshiyuki, Mitsubishi Materials Corp., 1-12-14, Koishikawa, Bunkyo-ku, Tokyo (JP); Takano, Rikuo, Mitsubishi Materials Corp., 1-12-14, Koishikawa, Bunkyo-ku, Tokyo (JP)
(74) Representative: HOFFMANN - EITLE

(57) **Abstract**

Amobile unit database server and a mobile radio router are provided to enable to process data as well as a plurality of communication terminals in one grouping without using telephone lines. The mobile unit database server is used in a communication system having at least one radio server connected to a network, and a radio base station communicating using radio signals with the mobile radio router connected to the radio server and to more than one terminal. The mobile unit database server is provided with: a mobile unit information database storing mobile unit information that associates identifiers and/or FQDNs and/or mobile FQDN of said mobile radio router with the identifiers and/or FQDN and/or IP address of the terminal connected to the mobile radio router, and are stored as mobile unit information; and mobile unit managing devices for renewing mobile unit information in response to a request to register mobile unit information sent from the radio server.

## Description

### BACKGROUND OF THE INVENTION

### Field of the Invention

The present invention relates to a mobile wireless communication based on the Internet, and relates in particular to a mobile unit database server that allows a mobile radio router and terminals that can be connected to the mobile radio router to communicate with a host connected to the Internet, a mobile radio rou ter and a method of charging for the services. The present invention also relates to a radio communication system, and relates to a vehicle-mounted router, in particular, that travels through a plurality of radio communication zones.

### Brief Description of the Related Art

In the field of computer-based network that relies on fixed connections, IP protocol has long been used for communications through the Internet; on the other hand, in the mobile communications field it has also become possible, in recent years, to connect to the Internet. However, in the existing mobile communication systems (data communication systems based on portable phone network and handy phone network), operation is being managed through an assigned numbering system similar to telephone numbers, so that addresses or domain names used in the IP network cannot be used. For this reason, it is necessary to provide an interface (gateway portion) between the Internet network and mobile communication networks to perform address conversion.

When it is desired to connect a general information terminal such as personal computer or PDA (personal digital assistant) by way of mobile communication network, the procedure is to connect to a telephone line first by dialing a number, and then to connect to the Internet. Also, the system is arranged such that a mobile radio device (portable phones or handy phone system) having a contract with a communication service provider to use the communication line, is connected to a terminal device such as a personal computer to communicate with another terminal device such as another computer connected to the network using radio signals, and therefore, when a plurality of terminals are involved, it is necessary to purchase a necessary number of mobile radio devices and secure contracts for their use, or to use one mobile radio device and switch the terminal connections as necessary.

However, in the conventional systems based on gateways, network is made susceptible to shutdown by traffic congestion around the gateways. Also, the services that can be offered are restricted to those that can be supported by the gateway operation, and consequently, the existing network does not evolve into a new network that can support the entire spectrum of Internet standards. This leads to difficulty in developing standard applications for the Internet and the attendant problems of lengthy development time and high cost

Also, when a mobile terminal attempts to contact a host in a global network, because the mobile radio device (portable phones or handy phone systems) does not have a capability for assigning the packets according to their addresses, the mobile radio device and the terminal are limited to the one-on-one connection. Therefore, it is necessary to contract individual lines for a plurality of such communication terminals to establish an environment in which each terminal can operate individually. This results in a problem of high maintenance cost.

Further, when the communication is provided through telephone lines, because charging is generally made according to the volume of data transmitted, there is a problem that a huge communication costs are incurred by the multi-line user. Accordingly, if the device described above becomes popular and if many such devices are in use at the same time, the telephone lines will become severely overloaded. Moreover, since it is possible that individual connections would be connected continually, a problematic situation could develop in which some users are not able to access t he line.

Further, a unit including a mobile radio device and a terminal into one body can be used by another person, if the unit is lost or forgotten, so that there is a high risk that such a unit can be used easily by others. Nevertheless, solution is difficult to find for providing security for the terminal to prevent someone to use the terminal without authorization.

In the meantime, mobile wireless Internet communication systems have long been used for connecting many in-car devices as card reader (fee collection), voice dispatching systems, CarNavi (car navigation systems), GPS (global positioning systems) to an external network using radio devices such as portable phones, business radio devices, VICS (vehicle information communication system) and ETC (electronic toll collection).

On the other hand, becoming available are radio communication systems that allows a vehicle-mounted control-system data network for obtaining data sent by sensors in the vehicle to detect the state of the (running) vehicle, such as CAN (controlled area network), to connect to an external network by using a portable phone.

Also available is a system to connect a device based on IP-protocol to the Internet by using a short-range radio communication device such as Bluetooth for data exchange between the device and a portable phone device.

However, according to the technologies described above, when it is desired to use a plurality of radio devices, it is necessary to obtain a contracted line for each of the plurality of communication devices such that the user must maintain redundant line contracts, resulting in a problem of excessive financial burden on the user.

Also, communication methods such as Bluetooth present a problem that, because NAT (network address translation) service necessary for address resolution in the IP layer does not exist, the portable telephone and the terminal under its control are in the master-slave relationship during IP communication so that IP communication between controlled terminals are unable to be carried out, resulting in a situation that communication is strictly between the master and its slave and that applications above the IP layer can only be used during the time of connecting to the Internet.

Also, another problem is that, because a portable telephone is used to connect an in-car LAN (local area network) such as CAN mentioned above to an external network, it is necessary to dial for each connection, creating cumbersome operation as well as high cost of communication resulting from the use of portable phones.

Even in the case of connecting wireless LAN such as Bluetooth to the Internet by using portable telephone, it is necessary to dial for connection, and the terminals are unable to carry out IP-based communications among themselves, thus resulting in high cost of communication due to the use of portable phones. Further, only one terminal can communicate with the Internet at one time, so that the problem exists of the inability for the plurality of terminals to communicate with each of her at the same time. Accordingly, the problem in the existing communication systems has been the lack of real-time capability.

### SUMMARY OF THE INVENTION

The present invention is provided in view of the background information described above, and an object is to provide a network that enables to connect to the Internet without going through a gateway, namely, a mobile radio router, a mobile unit database server, and a radio server operating, which allows a plurality of terminals to process together as one group.

Also, the present invention provides a charging method that enables to reduce the expense related to the use of communication lines when using a plurality of terminals for communication.

Also, the present invention provides a communication system that enables security to be maintained even if the user loses one or the other of mobile radio router or the terminal due to theft or misplacing.

Further, another object of the present invention is to provide a vehicle-mounted router that enables a plurality of terminals to communicate concurrently without increasing the cost load of communication.

Also, the present invention provides a vehicle-mounted router that enables a plurality of terminals under control of the vehicle -mounted router to carry out I P communication among themselves.

To achieve the objects described above, the present invention provides a communication system comprising: at least one radio server connected to a network; not less than one radio base station connected to the radio server; and a mobile radio router that controls at least not less than one terminal and carries out communication with said radio base station by radio transmission; wherein, when it is necessary for a terminal under control of said mobile radio router to commu nicate with a terminal under control of another mobile radio router or a host connected to the global network, address resolution is enabled using the IP address of the terminal under control of said mobile radio router.

The present invention also provides a communication system comprising: at least one radio server connected to a network; not less than one radio base station connected to the radio server; and a mobile radio router that controls at least not less than one terminal and carries out communication with said radio base station by radio transmission; wherein, when a terminal under control of said mobile radio router relocates from said one network to another network connected to said global network, and needs to communicate with a terminal under control of another mobile radio router, or a host connected to the network, address resolution is enabled using the IP address of the terminal.

The present invention also provides a mobile unit database server for use in a communication system comprising: at least one radio server connected to a network; not less than one radio base station connected to the radio server; and a mobile radio router that controls at least not less than one terminal and carries out communication with said radio base station by radio transmission; wherein the mobile unit database server is provided with a mobile unit information database storing mobile unit information that associates identifiers and/or FQDNs and/or a mobile FQDN of said mobile radio router with the identifiers and/or FQDN and/or IP address of said terminal.

The present invention also includes in the above mobile unit database server, when a terminal under control of the mobile radio router communicates with a host connected to a global network or a terminal und er control of another mobile radio router, the terminal under the control of the mobile radio router, as a communication party specified by the host or by the terminal under the control of another mobile radio router, detects a radio server to which the terminal as said communicating party is connected by way of the mobile radio router according to mobile unit information stored in the mobile unit information database.

The present invention also includes in the above mobile unit database server, when a terminal under control of the mobile radio router communicates with the host connected to the global network or the terminal under the control of another mobile radio router, the terminal as said communication party allows the radio server connected to this terminal to notify the host or the terminal under control of another mobile radio router about an IP address of the terminal as said communication party.

The present invention also includes in the above mobile unit database server, when said mobile radio router issues an IP address to said terminal that is connected to this mobile radio router, the mobile unit database server that is the home of said terminal provides to said mobile radio router the address information necessary for said mobile radio router to issue the IP address to said terminal.

The present invention also includes in the above mobile unit database server, when the terminal under the control of the mobile radio router communicates with the host connected to the global network or the terminal under the control of another mobile radio router, the IP address of the terminal as said communication party, of which said host or said terminal under the control of another mobile radio router is notified, is the IP address after being translated from the IP address, which is issued by said mobile radio router to said terminal under the control thereof, to the IP address system of the network to which said radio server that is presently connected to said terminal belongs.

The present invention also provides a mobile radio router for use in a communication system comprising: at least one radio server connected to a network; not less than one radio base station connected to the radio server; and a mobile radio router that controls at least not less than one terminal and carries out communication with said radio base station by radio transmission; wherein the mobile radio router is provided with a terminal managing database that stores the IP addresses of the terminal assigned by the mobile unit database server by associating the IP address of said terminal with an identifier of said terminal.

The present invention also includes in the above mobile radio router, wherein the IP address of said terminal is issued based on address information obtained from t he home mobile unit database server of said terminal.

The present invention also includes in the above mobile radio router, wherein authentication of said terminal is carried out by searching said terminal managing database.

The present invention also includes in the above mobile radio router, in the case that communication is carried out between a terminal under the control of said mobile radio router and a host connected to a global network or a terminal under control of another mobile radio router, the routing of the IP packet is carried out according to said IP address.

The present invention also provides accounting method used in a communication system that includes at least one radio server connected to a network; not less than one radio base station connected to the radio server; and a mobile radio router that controls not less than one terminal and carries out communication with said radio base station by radio transmission, wherein in the case that a plurality of terminals are connected to said mobile radio router, discounted usage fees for the communication lines are implemented depending on the number of said connected terminals.

The present invention also include in the above method, wherein the fee for using communication lines is based on imposing a pre-determined amount of charge for a pre-determined time period.

The present invention also includes in the above method, wherein when the pre-determined charge is A$ and the number of terminals is n, an amount of charging is less than (A*n)$ in the pre-determined time period.

The present invention also provides a mobile unit managing program containing steps for execution of computing tasks in a communication system comprising: at least one radio server connected to a network; not less than one radio base station connected to the radio server; and a mobile radio router that controls at least not less than one terminal and carries out communication with said radio base station using radio transmission; wherein, when a terminal under control of said mobile radio router communicates with a host connected to a global network or a terminal under control of another mobile radio router, the program includes the steps of: the terminal under the control of the mobile radio router, as a communication party specified by the host or by the terminal under the control of another mobile radio router, detecting a radio server to which the terminal as said communication party is connected by way of the mobile radio router by using a managing information database that contains identifiers and/or FQDN and/or mobile FQDN of said mobile radio router associated with identifiers, FQDN, or IP addresses of terminals, and stored as mobile unit information; and the terminal as said communication party allowing the radio server connected to this terminal to notify said host or terminal under the control of another mobile radio router about the IP address of the terminal as said communication party.

A computer-readable recording medium having recorded programs for executing computing tasks in a communication system comprising: at least one radio server connected to a network; not less than one radio base station connected to the radio server; and a mobile radio router that controls at least not less than one terminal and carries out communication with said radio base station by radio transmission; wherein, when a terminal under control of the mobile radio router communicates with a host connected to a global network or a terminal under control of another mobile radio router, the program includes the steps of: the terminal under the control of the mobile radio router, as a communication party specified by the host or by the terminal under the control of another mobile radio router, detecting a radio server to which the terminal as said communication party is connected by way of the mobile radio router by using a managing information database that contains identifiers and/or FQDN and/or mobile FQDN of said mobile radio router associated with identifiers, FQDN, or IP addresses of the terminals, and stored as mobile unit information; and the terminal as said communication party allowing the radio server connected to this terminal to notify said host or terminal under the control of another mobile radio router about the IP address of the terminal as said communication party.

The present invention also provides a radio communication program containing steps for execution of computing tasks in a communication system comprising: at least one radio server connected to a network; not less than one radio base station connected to the radio server; and a mobile radio router controlling at least not less than one terminal; wherein, when the registration and authentication process of said terminal that is connected to said mobile radio router is carried out, a computer executes the steps of: carrying out authentication based on information in the terminal managing database that stores the identifiers of said terminal, and assigning IP addresses to said terminal based on address information obtained from the home mobile unit database server of said terminal.

The present invention also provides a computer-readable recording medium containing a radio communication program for executing computing tasks in a communication system comprising: at least one radio server connected to a network; not less than one radio base station connected to the radio server; and a mobile radio router controlling at least not less than one terminal; wherein, when the registration and authentication process of said terminal that is connected to said mobile radio router is carried out, a computer executes the steps of: carrying out authentication based on information in the terminal managing database that stores the identifiers of said terminal, and assigning IP addresses to said terminal based on address information obtained from the home mobile unit database server of said terminal.

According to the present invention, because it enables to find out the radio server to which the mobile radio router and the terminal are connected by using a mobile unit database server having a mobile unit managing database and a mobile unit managing device, thereby offering an advantage that, when a communication request is made to the terminal externally, a plurality of communication terminals can be processed together as one group without having to use telephone lines.

Also, according to the present invention, because a mobile unit database server is provided in a radio communication system in which a plurality of networks are connected to the global network, communication capabilities are not limited by signal relaying equipment, thus enabling a host and a terminal to communicate directly.

Also, the present invention provides an economic advantage that, because the fee for using the communication lines can be discounted when a plurality of terminals are connected to a mobile radio router, the cost of contracting for a plurality of lines is reduced.

Further, the present invention provides a vehicle-mounted router for use in a communication system comprising: at least one radio server connected to a network; not less than one radio base station connected to the radio server; and a mobile radio router controlling at least not less than one terminal for communicating with the radio base station using radio signals; wherein the vehicle-mounted router is provided with a communication device for routing IP packets between a terminal under control of the vehicle-mounted router and a host or a terminal under control of another vehicle-mounted router in such a way that the IP packets are transmitted according to the Internet protocol and routed according to address information associated with the IP packets, and the communication devices are installed in the vehicle.

Also, the present invention includes in the above vehicle-mounted router, wherein at least one terminal is a control-system information input/output apparatus.

The present invention also includes in the above vehicle-mounted router, wherein the communication devices perform the routing of packets according to an IP address assigned to the terminal or the host or the terminal under control of another mobile radio router or the host.

The present invention also enables the vehicle-mounted router to be used in a communication system comprising at least one radio server, not less than one radio base station connected to the radio server, and a vehicle-mounted router that controls at least not less than one terminal and carries out communication with said radio base station using radio transmission.

The present invention provides a feature, in the above vehicle-mounted router, that the communication devices transmit only IP packets.

The present invention also provides an agent server for use in a communication system comprising: at least one radio server connected to a network; not less than one radio base station connected to the radio server, a vehicle-mounted router according to claims 19 to 23 controlling at least not less than one terminal and connected to said radio base station by radio transmission; and the agent server connected to the network wherein the agent server is provided with: an authentication information database having pre-recorded client authentication information for authenticating a connection client, and vehicle identifier address information for authenticating a vehicle having the vehicle-mounted router; and control devices for performing an authentication process by receiving client information for identifying the connection client and vehicle identifier address information for identifying the vehicle which are sent from the terminal by way of said vehicle-mounted router, and by processing the received client information and vehicle identifier address information according to the client authentication information and the vehicle identifier address information contained in the authentication information database.

The present invention also includes, in the above agent server, a feature that the agent server is provided with information processing devices that receive control-system data to show the status of the vehicle sent from the terminal by way of said vehicle-mounted router, and process the received control-system data and then generate car information contents.

The present invention also provides a communication method by using a communication system comprising: at least one radio server connected to a network; not less than one radio base station connected to the radio server; a mobile radio router controlling at least not less than one terminal, and a vehicle-mounted router that controls not less than one terminal and carries out communication with said radio base station by radio transmission; wherein, the vehicle-mounted router is mounted in a vehicle; a terminal under control of the vehicle-mounted router and a host on a global network or a terminal under control of another vehicle-mounted router communicate with each other according to IP protocol; and, as necessary, IP packets are generated from the communication data output from the terminal under the co ntrol of said vehicle-mounted router, the communication data is generated from the IP packets received from said host on the global network or the terminal under the control of another vehicle -mounted router, and thereby communication is carried out between the terminal under the control of said vehicle-mounted router and said host or the terminal under the control of another vehicle-mounted router.

According to the present invention, a vehicle-mounted router is provided to operate in such a way that a terminal under control of the vehicle-mounted router and a host connected to a global network or a terminal under control of another vehicle-mounted router operate according to the Internet protocol, and IP packets are transmitted according to the Internet protocol and routed according to IP addresses between the terminal under control of the vehicle-mounted router, and the host connected to the global network or the terminal under control of another vehicle-mounted router. Therefore, the network can be conn ected to the Internet without going through the gateways, thus enabling to process a plurality of terminals together as one group.

The present invention also enables to improve security of communication involving the vehicle-mounted router, because authentication of user of the vehicle-mounted router is based on information stored in the authentication information database.

The present invention enables a wide-ranging services to be offered to the user including the driving user, because car information contents are prepared by receiving control-system data indicating various status of a vehicle sent by a terminal in the vehicle via the vehicle-mounted router and by processing the received control-system information, it is therefore possible to transmit contents that report the current status of the vehicle from the control-system output apparatus to the terminal of the driving user or to a terminal of the user located within a given distance from the vehicle.

### BRIEF DESCRIPTION OF THE DRAWINGS

In the following, preferred embodiments of the present invention will be explained with reference to the drawings, in which like elements bear like reference numerals, and wherein:
Figure 1 is a schematic block diagram of a radio communication system in a first embodiment;
Figure 2 is a schematic block diagram to show the structure of a mobile unit database server;
Figure 3 is a diagram to show an example of a mobile unit information stored in mobile unit information database;
Figure 4 is a schematic block diagram to show the construction of radio server in Figure 1;
Figure 5 is a diagram to show an example of managing information stored in the mobile unit managing database;
Figure 6 is a schematic block diagram to show the structure of the mobile radio router in Figure 1;
Figure 7 is a diagram to show an example of terminal registration information stored in the mobile unit managing database;
Figure 8 is a flowchart for explaining the process of registration/authentication;
Figure 9 is a flowchart for explaining the process of address resolution;
Figure 10 is a flowchart for explaining the process of confirmation for data sending and receiving;
Figure 11 is a flowchart for explaining the process of address resolution request for FQDN in terminal when sending data from the host to the terminal;
Figure 12 is a flowchart for explaining the process of forwarding sending data from the host to the terminal;
Figure 13 is flowchart for explaining the processing of the registration/authentication in the case that the radio communication group is connected to a radio server that is not controlled by the home mobile unit database server;
Figure 14 is a schematic block diagram to show the structure of a radio communication system, vehicle-mounted router in the first embodiment;
Figure 15 is a schematic diagram for explaining the vehicle-mounted router;
Figure 16 is a schematic block diagram for explaining the radio communication group;
Figure 17 is a diagram for explaining an example of the control system data;
Figure 18 is a schematic block diagram to show the structure of an agent server;
Figure 19 is a flowchart for explaining operation of the radio communication system;
Figure 20 is a flowchart for explaining a case of one terminal to communicate with the agent server;
Figure 21 is a flowchart for explaining a case of remote operation for a vehicle with increased security;
Figure 22 is a diagram for explaining an application of the radio communication system;
Figure 23 is a diagram for explaining another application of the radio communication system;
Figure 24 is a diagram for explaining still another application of the radio communication system;
Figure 25 is a diagram for explaining further application of the radio communication system; and
Figure 26 is a diagram for explaining still further application of the radio communication system.

### DETAILED DESCRIPTION OF THE PREFERRED EMBODIMENTS

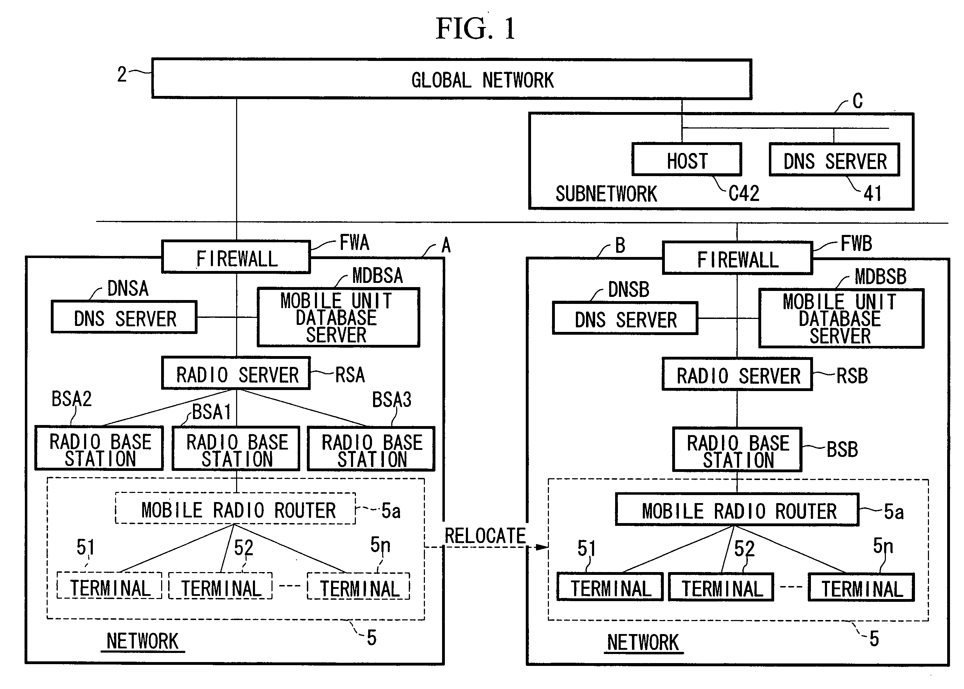

In the following, a communication system, a mobile unit database server, a mobile radio router in an embodiment of the present invention will be explained with reference to the drawings. Figure 1 is a schematic block diagram to show the structure of the radio communication system.

In this diagram, a network A, network B and network C are connected to the global network 2. The networks A, B may be connected by way of the global network or in some cases, they may be connected directly to each other. A reference numeral 41 relates to DNS (domain name system) server, and C42 relates to a host.

A numeral 2 relates to a glob al network connected to the host C42. This global network 2 is the Internet, for example.

Alphabet designations A, B relate to networks. For example, network A and network B may be constituted by an intranet within an association, or a network belonging to an Internet service provider.

Designations RSA, RSB relate to radio servers connected to the global network 2. Radio server RSA is connected to global network 2 through a firewall FWA, and radio server RSB is connected to global network 2 through a firewall FWB.

Radio server RSA assigns a presently useable IP address to the mobile radio router 5a associated at the present time with the radio server RSA itself, and at the same time associates and stores the mobile radio router identifier, FQDN (Full y Qualified Domain Name), a mobile FQDN to the assigned IP address. In addition, the IP address assigned to the terminal by the mobile router based on information from the identifier of the terminal under control of the mobile radio router and the home m obile unit database server of this terminal is associated with an IP address translated from said IP address assigned to the terminal by a NAT (Network Address Translation) function of itself

Here, a plurality of radio servers may be provided within a network depending on needs (for example, radio servers RSA1∼RSAn, radio servers RSB1∼RSBn)

Designations BSA1∼BSA3, BSB relate to radio base stations connected to the radio servers RSA, RSB, and one or a plurality of radio base stations may be connected to each radio server. In this example, three units of radio base stations BSA1, BSA2, BSA3 are connected to the radio server RSA while for radio server RSB, one radio base station BSB is shown.

Firewall FWA is provided in network A and firewall FWB is provided in network B.

Designation DNSA relates to a DNS server provided in network A, and designation DNSB relates to a DNS server provided in network B.

A reference numeral 5 relates to a radio communication group that connects to a radio server RSA (or RSB) by way of a radio base station BSA (or BSB) by radio signals, and is comprising a mobile radio router 5a that communicates with the radio base station BSA (or BSB) by radio signals, and terminals 51∼5n connected to the mobile radio router 5a.

Also, mobile radio router 5a connects to at least one or more terminals by radio signals. For this radio communication, wireless LAN and Bluetooth and the like are applicable. Bluetooth refers to a short -range communication technology based on 2.4 GHz band. In this case, terminals 51∼5n are connected to the mobile radio router 5a. Here, at least any one of the terminals may be connected by wire to the mobile radio router 5a, and at least any one of the terminals and the mobile radio router 5a may be housed in a common casing.

The mobile radio router 5a has pre-stored identifiers for those terminals that are connectable to itself. And, among the terminals under its control, it has a capability to authenticate those terminals that are needed to be connected to itself to keep them in operable state. Also, the mobile radio router 5a stores information on those terminals that it is authorized to register, and current registration status of those terminal that are connected to itself, terminal identifiers and their IP addresses. The mobile radio router 5a also stores its own identifier and an IP address assigned by the radio server. In addition, the mobile radio router 5a stores the identifier, the FQDN, the mobile FQDN of the mobile radio router itself as well as the IP address assigned by the radio server to which the mobile radio router 5a itself is presently connected.

The mobile radio router 5a performs routing of IP packets according to the IP addresses, and sends the IP packets to their destination terminals. Also, when a request for registration is made by a terminal other than those that are allowed to connect, the request is denied thereby assuring security of communication between the mobile radio router and the terminals.

Terminals 51∼5n represent personal computers and PDA, CarNavi, and various devices having computing capabilities that are termed "wearable computers", position sensors (GPS) and various information terminals (information that can be transmitted through IP networks such as various sensor information for a vehicle, data accessing point for showing operational status of household electrical appliances, and the like). For those devices that cannot perform IP packet transmission using sensors and the like, an interface for transmission of IP packet may be connected.

The mobile radio router 5a, terminals 51∼5n are given either the mobile unit database server MDBSA or MDBSB as their home mobile unit database server. In this case, the home mobile unit database server for the mobile radio route r 5a and terminals 51∼5n shown in Figure 1 is assumed to be the mobile unit database server MDBSA.

The mobile unit database server MDBSA is connected to the global network 2 via the firewall FWA, and manages information on which radio communication group is connected to which radio server. The mobile unit database server MDBSA exists in network A, and the mobile unit database server MDBSB exists in network B. A plurality of mobile unit database servers MDBSA (MDBSB) may be provided in plurality within each network.

The mobile unit database server MDBSA manages identifiers and addresses of radio server RSA, radio base stations BSA1∼BSA3 under its control. Also, it manages identifiers, FQDN, mobile FQDN, and IP address of mobile radio router 5a for which it serves as a home server,, as well as identifiers, FQDN and IP addresses of terminals 51, 52, ... 5n. The mobile unit database server MDBSA as the home mobile unit database server for the mobile radio server 5a sends to this mobile radio router 5a the authentification information for terminals 51, 52, ..., 5n connected to the mobile router 5a, and network address information for issuing the IP address according to the requirements from the mobile radio router 5a. It should be noted that the mobile unit database server MDBSB has the same capabilities as those of the mobile unit database server MDBSA.

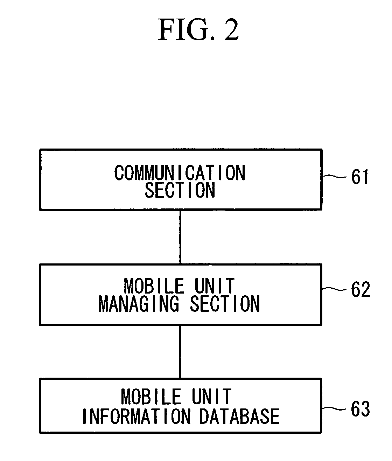

Next, the structure of the mobile unit database server MDBSA in Figure 1 will be explained in detail with reference to the drawings. Figure 2 is a schematic block diagram to show the structure of the mobile unit database server MDBSA in Figure 1.

In this diagram, the communication section 61 communicates with the other mobile unit database server MDBSB via the radio server RSA, the DNS server DNSA, and the firewall FWA..

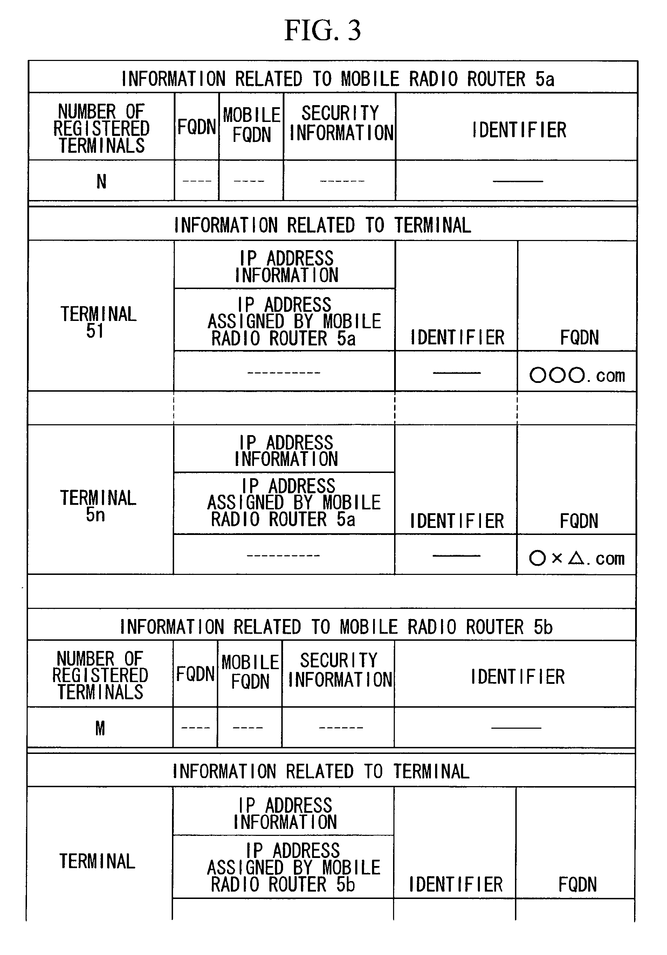

Mobile unit information database 63 associates and registers communicable mobile radio router 5a and terminals 51∼5a as mobile unit information, and stores the results so as to manage the mobile radio router 5a and terminals 51∼5a. That is, the identifiers for the communicable mobile radio routers, the identifier for the terminals, and FQDN are associated to each other, and are pre-registered and stored. The mobile unit information database 63 stores as information related to mobile radio router 5a, for example, the identifiers to identify the mobile radio router 5a, security information, FQDN, the mobile FQDN that is obtained by synthesizing the FQDN of the radio server presently connected and the FQDN of the mobile radio router 5a, and th e number of terminal registrations under the control of the mobile radio router 5a, as shown in Figure 3. Information on the terminals are also stored, for example, by associating the identifiers and FQDN to identify the terminals 51∼5a with IP addresses assigned by the mobile radio router 5a based on information provided by the mobile unit database server MDBSA, which is the home mobile unit database server. Such information is stored as mobile unit information, and, when there are a number of communication groups, information on respective mobile radio routers and terminals under their control are also stored. The identifiers relate, for example, to unique numbers assigned to each equipment during their manufacturing.

Mobile unit managing section 62 controls mobile unit information by updating the information stored in the mobile unit information database 63 according to requests for registration of mobile unit information sent from the radio server RSA (or radio server RSB). For example, when it is necessary to switch the radio communication group from the currently-connected radio server to another radio server, authentification processing is carried out by searching the mobile unit information database 63 depending on the authentification request related to the mobile radio router 5a from the radio server to which the radio communication group has moved, and at the same time, when authentification has been carried out, a mobile FQDN that shows the present affiliation of the mobile radio router 5a is synthesized by mobile unit managing section 62 from the FQDN of the radio server sent from the radio server of the movement destination and the FQDN of the mobile radio router 5a stored in advance, and the content of the mobile unit information database is updated. In addition, network addresses for terminals 51, 52, ... 5n connected to the mobile radio router 5a are provided to the mobile radio router 5a, and at the same time, IP addresses for terminals are newly synthesized from the identifiers of terminals and network addresses stored in advance. In addition, the mobile unit managing section 62 sends the new synthesized IP addresses to the radio server BSA1 that is presently connected to the mobile radio router 5a, and the content of the mobile unit information database is updated.

Also, in the case that any among the terminals 51, 52, ... 5n and a host (for example, host C42) or a terminal under control of another mobile radio router carry out communication via the mobile radio router 5a, the terminal 51, 52, ... 5n under the control of the mobile radio router5a, as a communication party specified by the host or by the terminal under the control of another mobile radio router, detects the radio server to which the terminal 51, 52, ... 5n as said communicating party is connected by way of the mobile radio router 5a by using the mobile unit managing section 62 based on the mobile unit information stored in the mobile unit information database 63, and for the radio server that has been detected, a request is made using the NAT function to inform the host or the terminal under control of another mobile radio router about the IP address of the terminal after translating the IP address assigned by the mobile radio router 5a into the IP address system of the network that t he radio server itself is affiliated with.

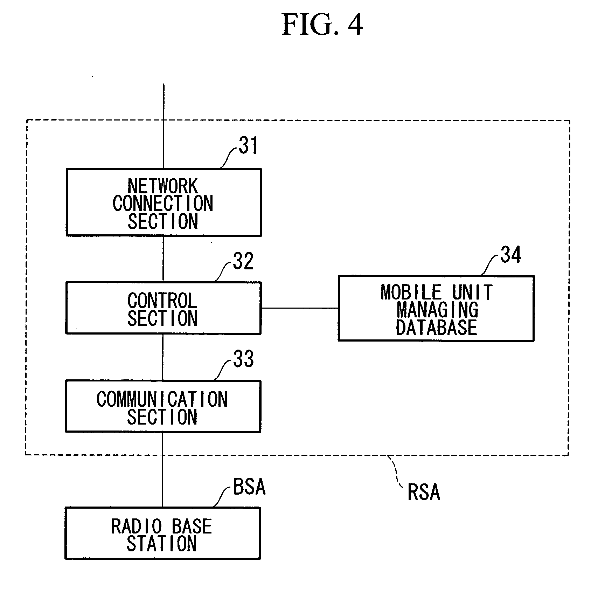

Next, the structure of the radio server RSA in Figure 1 will be explained with reference to the drawing. Figure 4 is a schematic block diagram to show the structure of the radio server in Figure 1. In this diagram, network connection section 31 communicates with the DNS server DNSA and the mobile unit database server MDBSA. In addition, network connection section 31 also communicates, through the firewall FWA, with other networks by way of the global network, dedicated lines, and public lines. Here, it should be noted that, if the functions of mobile unit database server MDBSA and radio server RSA are integrated into one unit, it is not necessary to communicate with the mobile unit database server MDBSA.

The control section 32 carries out authentification of the registration requirements sent from the mobile radio router 5a and responds either with a permission to register or a refusal to register. In the case of permission to register, the IP address is issued to the mobile radio router 5a and sent to the mobile radio router 5a. At the same time, security information of the mobile radio router 5a is requested to the mobile unit database server MDBSA, which is the home mobile unit database server of the mobile radio router 5a, and in addition to storing the received security information in the mobile unit managing database 34, the IP addresses of the terminals 51, 52, ..., 5n under control of the mobile radio router received from the mobile unit database server MDBSA are translated using the NAT function to an address system of the network to which it is affiliated. Also, the control section 32 manages communication operations by referring to the information stored in the mobile unit managing database 34.

Communication section 33 carries out communication with the mobile radio router via the radio base station BSA1, 2, and 3.

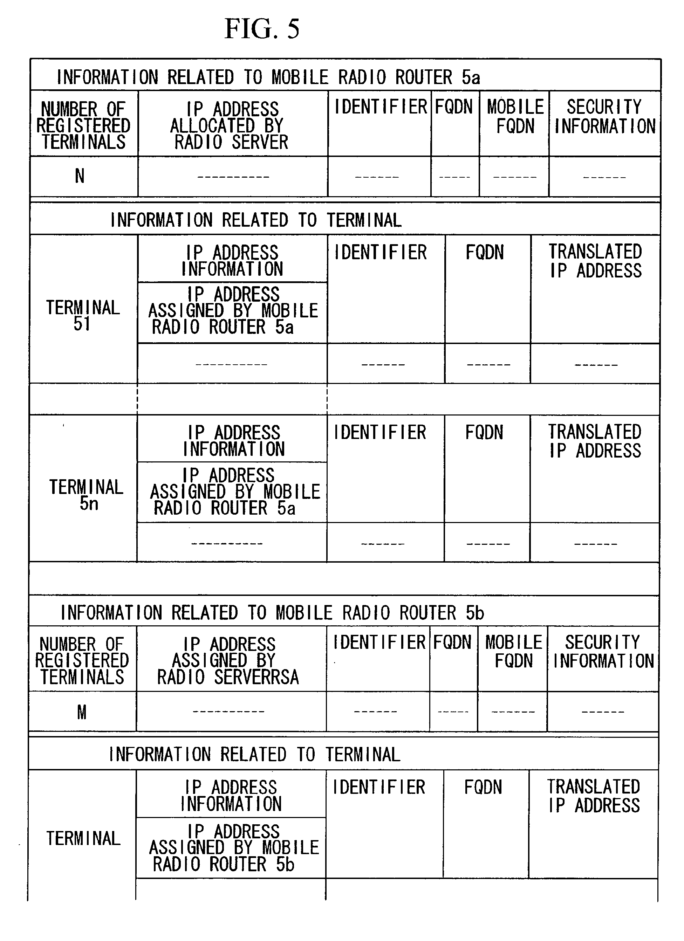

As shown in Figure 5, mobile unit managing database 34 stores managing information, for example. That is, it stores associated info rmation regarding the mobile radio router 5a including identifiers of the mobile radio router 5a, the IP address assigned by the radio server RSA, which is the radio server presently connected, a mobile FQDN obtained by synthesizing the FQDN of the radio server and the FQDN of the mobile radio router 5a, security information, and the number of registered terminals under the control of the mobile radio router 5a, and also associated information regarding the terminal including the identifiers for terminals 51 to 5n, the FQDN, the IP address of the terminal received from the mobile unit database server MDBSA which is the home mobile unit database server of the terminals 51, 52, ..., 5n and the mobile radio router 5a, during registration and authentification of the mobile radio router 5a, and the IP address after translating the above mentioned IP address of the terminals using the NAT function into the address system of the network that is affiliated with. This information is stored as mobile unit information, and in the case that there are a plurality of radio communication groups, the information for each mobile radio router and the terminals under their control is stored.

The mobile unit managing database 34 stores the managing information for each radio communication group in the case that there are a plurality of radio communication groups. In addition, the mobile unit managing database 34 is provided for each radio server. Moreover, the structure of the radio server RSB is identical to the structure to the radio server RSA described above.

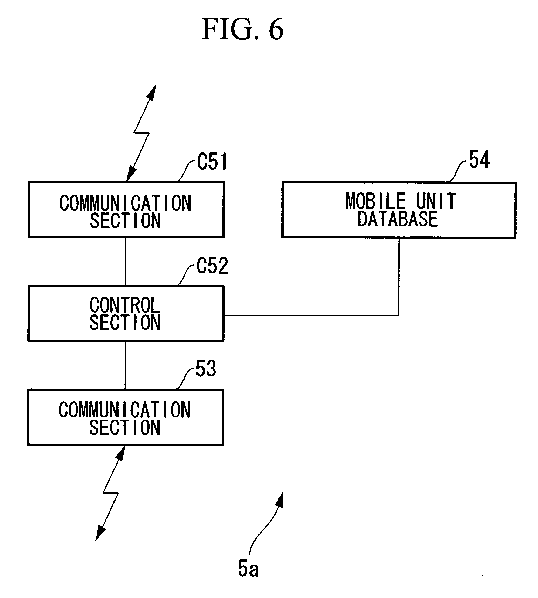

The structure of mobile radio router 5a in Figure 1 will be explained with reference to the drawings. Figure 6 is a schematic block diagram to show the structure of the mobile radio router 5a in Figure 1.

In this diagram, communication section C51 communicates with the radio base stations using radio signals.

Also, control section C52 requests a registration to the radio server that manages those radio base stations that operate in the same area as itself, and stores the information received at the time of authentication in the mobile unit database 54.

Also, the control section C52 controls registration operation of registration authentication so that determination of whether or not to authenticate a terminal is carried out according to information stored in the pre -registered mobile unit database 54.

Also, at the time of registering a terminal, the control section C52 synthesizes and assigns the IP address from the identifier of the terminal and the network address received from the home mobile unit database server when issuing IP addresses to terminals at the time of registration.

Control section C52 also functions as an IP router. That is, based on the IP addresses assigned to the terminals, it controls the process of determining the routing path for a packet sent from the network side to a terminal according to the IP address assigned to the terminal. By so doing, when the terminal communicates with another host, the terminal that has the IP address specified by the host, according to the mobile unit information stored in the mobile unit database 54, establishes communication with the host through the radio server.

Communication section 53 establishes communication with each terminal (terminals 51, 52 and others).

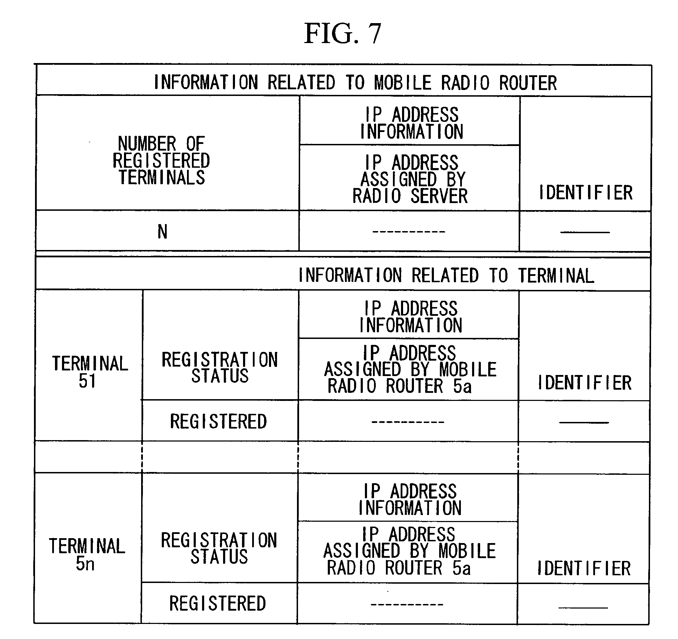

As shown in Figure 7, the mobile unit database 54 stores associated identifiers, IP addresses assigned by the radio server and the number of terminal registrations assigned by the radio server as the information related to the mobile radio route r (itself). Also, the mobile unit database 54 stores associated terminal information of identifiers; IP addresses assigned by the mobile unit database server and registration statuses (has been registered or not).

Here, even when the mobile radio router 5a relocates itself in another zone of radio base stations, if the radio server that manages the radio base stations in the relocated zone is the same as before, renewing of registration and authentication are not required and communication can be continued without interruption.

When the mobile radio router travels to another zone managed by a different radio server, the control section C52 requests registration allocation to a radio server that manages a radio base station located within the range for co mmunication and controls so that continual communication is possible.

Communication process between the mobile radio router 5a and the terminals 51∼5n may utilize Ethernet® or wireless LAN based on IEEE802.11 and the like. Also, communication between the mobile radio router 5a and each terminal, according to the PPP (point-to-point Protocol) connection method, is established in a way that the mobile radio router 5a functions as the access server for the terminal.

When the mobile radio router 5a and the terminals 51∼5n are connected according to Bluetooth method, device information for establishing communication with the terminal connected to the mobile radio router 5a is further stored in the terminal managing database 54. For example, the device information may include information on Bluetooth address, Bluetooth clock and link key for communicating with the terminals 51∼5n according to Bluetooth method.

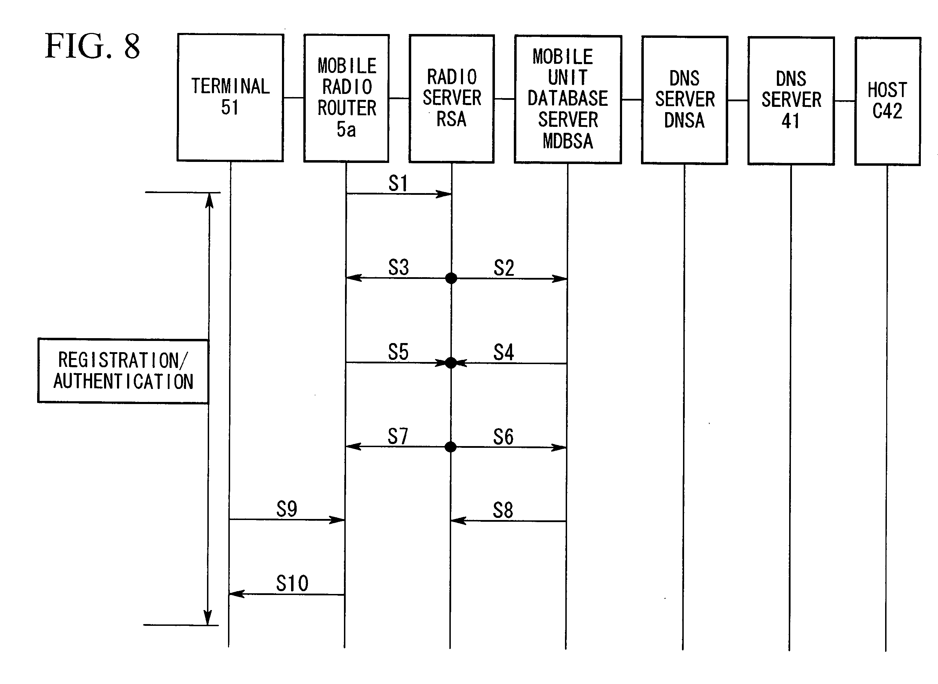

Next, in the structure described above, a process for sending data from terminal 51 to host C42 will be explained with reference to the flowcharts shown in Figures 8, 9 and 10.

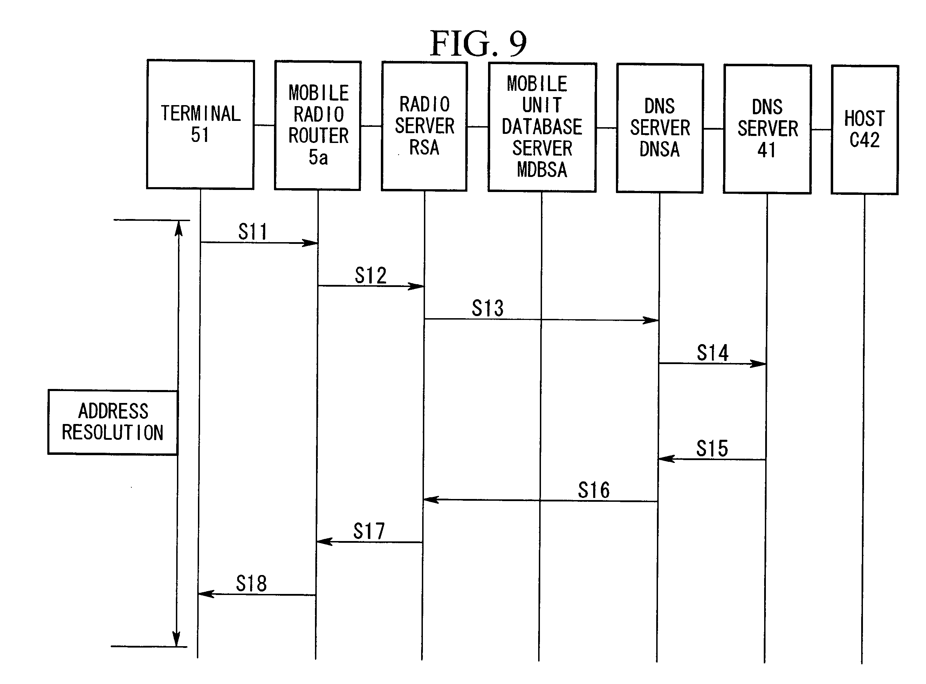

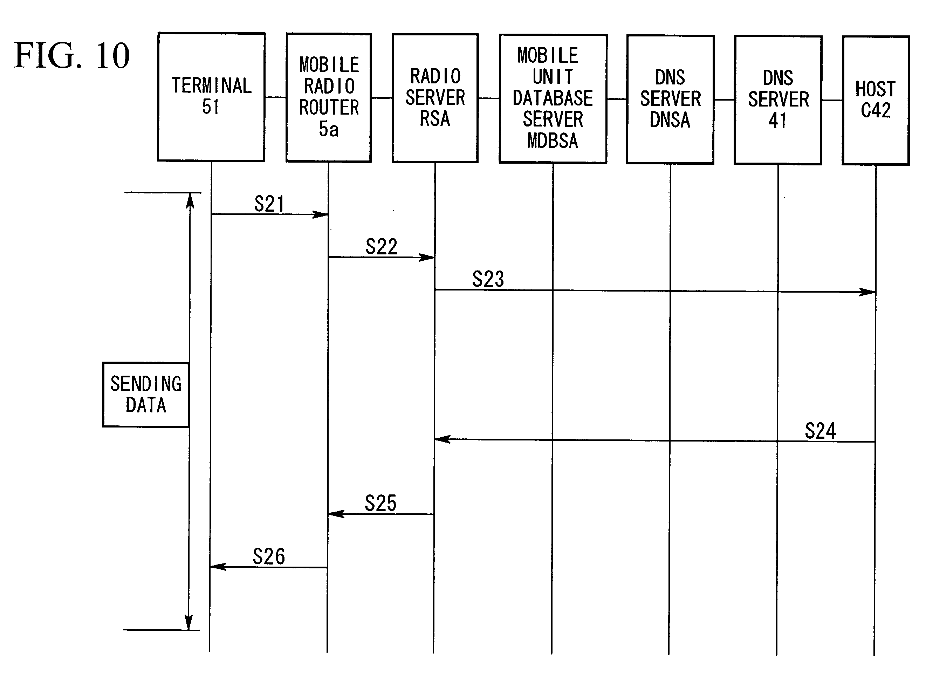

Figure 8 is a flowchart for the process of registration and authentication, Figure 9 is a flowchart for the process of address resolution, and Figure 10 is a flowchart for the process of confirmation response for data sending and receiving.

In this case, it is assumed that terminal 51 is in possession of the IP address of host C42. Also, it is assumed that the mobile unit information database 63 has in its memory mobile unit information for various devices within the radio communication group 5. Further, address resolution request in this embodiment refers to a process of deducing an IP address from FQDN.

First, process of registration and authentication will be explained with reference to Figure 8.

After the power of the mobile radio router 5a and the terminal 51 is switched on, the mobile radio router 5a sends a registration request and this own identifier to the radio server RSA

### (step S1).

When the radio server RSA receives the registration request and the identifier form the mobile radio router 5a, the identifier sent from the mobile radio router 5a and the random value generated by itself and its own FQDN are sent to the mobile unit database server MDBSA, and the request for authentification is carried out (step S2). Further, the radio server RSA sends the identifier of the mobile radio router 5a and the random value generated by itself to the mobile radio router 5a, and the request for authentification is carried out (step S3).

When the mobile unit database server MDBSA receives the random value sent from the radio server RSA, the identifier of the mobile radio router 5a, the FQDN of the radio server RSA, and the request for authentification, it is determined whether or not the identifier of the received mobile radio router 5a is stored in the mobile unit information database 63, and a the same time, a calculation is carried out using the identifier of the mobile radio router 5a and the received random value. In addition, the mobile unit database server MDBSA synthesizes the mobile FQDN (for example, "mur5a.mdbsa.nteworka, rsa.networka") that indicates the present affiliation of the mobile radio router 5a from the FQDN (for example "mur5a.mdbsa, networka") of the mobile radio router stored in advance and the received FQDN (for example, "rsa.networka") of the radio server RSA. Furthermore, the mobile unit database server MDBSA synthesizes the IP address (for example, "1.2.3.1", "1.2.3.2", ..., "1.2.3.n") of the terminal from the network address (for example, "1.2.3.0") in order for the mobile radio router 5a to assign IP addresses to the terminals 51, 52, ..., 5n and the identifiers (for example, "1, 2, ..., n") stored in advance which are assigned to the terminals 51, 52, ..., 5n to be connected to the mobile radio router 5a. In addition, the result of searching for the identifier of the mobile radio router 5a, the identifier of the mobile radio router 5a, the mobile FQDN, the results of the calculation, the network addresses necessary for the mobile radio router 5a to assign IP addresses to terminals, and the IP addresses of the terminals 51, 52, ..., 5n are sent to the radio server RSA as the authentication response (step S 4).

In contrast, when the mobile radio router 5a rec eives the identifier, the random value, and the authentication request from the radio server RSA, it carries out a calculation using the identifier and the random value. The result of this calculation and the identifier are sent to the radio server RSA as the authentication response (step S 5).

Next, when the radio mobile RSA receives the authentication response from the mobile unit database server MDBSA and the mobile radio router 5a, the confirmation of the research results of the identifier and the reference of the calculation result are carried out.

In the case that there are no problems with the result of the search for the identifier and the results of the calculation agree, the radio server RSA sends the registration completion notification and the security information request, and the identifier of the mobile radio router 5a to the mobile unit database server MDBSA (step S 6). Furthermore, the radio server RSA sends the identifier of the mobile radio router 5a, the mobile FQDN, the IP address and the network address information assigned to the mobile radio router 5a by itself to the mobile radio router 5a as a registration application (step S 7). At this time, the IP address that the radio server RSA has assigned to the mobile radio router 5a becomes the IP address of the host section such that the mobile radio router 5a is connected to every radio base station that is under the control of the radio server RSA. In addition, the received mobile FQDN of the of the mobile radio router 5a and the IP address of the terminals 51, 52, ..., 5n are stored and updated.

In the case that there are problems with the result of the search for the identifier and the reference of the result of the calculation, instead of a registration completion notification, the radio server RSA sends to the mobile unit database server MDBSA a notification indicating that registration is not possible and the identifier of the mobile radio router 5a (step S 6), and sends a registration rejection to the mobile radio router 5a (stop S 7).

By the processing described above, it can be confirmed whether or not the mobile radio router 5a that has carried out a fraudulent registration request, and thus it is possible to prevent a fraudulent connection.

Mobile unit database server MDBSA, upon receiving a registration completion notice, the security information request, and the identifier of the mobile radio router 5a from the radio server RSA, reads security information on the mobile radio router 5a and terminals 51∼5n pre-stored in the mobile unit information database, and sends the data to the radio server RSA (step S8). In this case, security information relates to information concerning whether or not to establish communication between one terminal and other terminal. Step S8 assures control over the security of whether or not to establish communication between mobile radio router 5a as well as terminals 51∼5n and other host or server and the like.

After its registration and authentication have been completed, when the mobile radio router 5a receives the registration request along with the identifiers for each terminal 51, 52, ..., 5n (step S 9), the authentication processing for each terminal is carried out. In the case that each terminal is authenticated, an IP address for each of the terminals is synthesized from the network address received from the MDBSA and the identifier of each of the terminals, and the synthesized IP address for each of the terminals is sent to each terminal along with the registration permission and the identifier (step S 10). In the case that the result of the authentication processing is that authentication was not possible, a registration rejection is sent to the terminals (step S 10).

The registration and authentication process is thus completed. In the above embodiment, steps S3, S5 were carried out to prevent a fraudulent registration, but authentication processing may be performed simply by using steps S2, S4.

Next, address resolution process to be performed after the completion of the process for registration and authentication will be explained with reference to the flowchart shown in Figure 9. Here, address resolution relates to a process for deducing an IP address that corresponds to FQDN.

When a request for address resolution, containing FQDN of host C42 processing address resolution and an IP address for terminal 51 showing the original sender, is sent from terminal 51 (step S11) the mobile radio router 5a sets the IP address of the mobile radio router 5a in the address resolution requ est that contains FQDN of target host C42 for address resolution and the IP address of the original sender of the address resolution request, and sends the data to the radio server RSA (step S12).

When the radio server RSA sends the address resolution request that sets the IP address of radio server RSA in the address resolution request that contains FQDN of target host C42 for address resolution and the IP address of the original sender of the address resolution request, the IP address-of the terminal 51 sent by the mobile unit database server MDBSA is translated to an IP address depending on the IP address system of the network A to which the radio server RSA itself is affiliated, and this translated IP address is sent to the DNS server DNSA as the origin of the request (step S13). At this time, the translated IP address of the terminal 51 is a currently usable IP address assigned by radio server RSA from a range of IP addresses set in advance by the radio server RSA. Because the DNS server DNSA does not itself manage FQDN of host C42, the address resolution request which includes the FQDN of the host C42 that is the object of address resolution and the translated IP address of the terminal 51 that is the origin of the request is sent to the DNS server 41. (step S14).

DNS server 41, upon receiving the address resolution request from the DNS server DNSA, reads the IP address corresponding to the FQDN of the target host C42 for address resolution, and the address resolution response that sets the IP addr ess of the host C42 that was read and the translated IP address of the terminal 51 that is the origin of the request is sent to the DNS server DNSA (step S15).

DNS server DNSA sends the address resolution response that sets the IP address of host C42 received from DNS server 41 and the translated IP address of the terminal 51 that was the origin of the request to the radio server RSA (step S16).

Radio server RSA, upon receiving the address resolution response from the DNS server DNSA, sends the address resolution response that sets the IP address of host C42 and the IP address of the terminal 51 that was the origin of the request to the mobile radio router 5a (step S17).

When the address resolution response is received from the radio server RSA, the mobile radio router 5a sends to the terminal 51 as the address resolution response the received IP address of the host C42 (step S18).

The process of address resolution has thus been carried out. Terminal 51 is thus able to secure the IP address of host C42.

Here, in the embodiment described above, when a firewall FWA is provided in the network A as indicated in Figure 1, there is a DNS server within the network A and a secondary DNS server exposed above the firewall FWA, but the explanations here related to a case of having one DNS server DNSA in behalf of two DNS servers. Also, if a network does not have a firewall FWA, it is simply a router and there would be only one DNS server.

The process of sending data after the completion of address resolution process will be explained with reference to Figure 10.

The terminal 51 sends a packet having the IP address of host C42 as its receiver and the IP address of terminal 51 as its original sender to the mobile radio router 5a, using the IP address of the mobile radio router 5a (step S21).

Mobile radio router 5a, upon receiving the packet from terminal 51, sends to the radio server RSA a packet which has the IP address of host C42 as the receiver and the IP address of terminal 51 as the original sender (step S22).

Radio server RSA, upon receiving the packet from the mobile radio router 5a, exchanges the IP address of terminal 51 as the original sender for the translated IP address, sets this translated IP address as the original sender, and sends a packet to the host C42 (step S23).

Host C42, upon receiving the packet from radio server RSA, sets the IP address of host C42 designated as the original sender and sends to radio server RSA the reception confirmation response that set the translated IP address as the destination (step S24).

Radio server RSA, upon receiving the reception confirmation response from host C42, returns to the IP address of the origin the translated IP address of the terminal 51 that has been set as the destination, and sends the returned IP address to the mobile radio router 5a as the destination (step S25).

Mobile radio router 5a, upon receiving the reception confirmation response from radio server RSA, sends to the terminal 51 the reception confirmation response that sets further data to the reception confirmation response, which contains the IP address of host C42 as the original sender and the IP address of terminal 51 as the receiver, by designating the IP address of mobile radio router 5a as the original sender (step S26).

The process of sending data has thus been completed.

In the embodiment described above, it should be noted that the present invention was applied to a connectionless type communication system such as UDP (user data gram protocol), but the present invention may also be applied to a connection type communication system such as TCP (transmission control protocol).

Also, the communication system described above has a host C42 inside the network D and its DNS server is known to be DNS server 41, but if it is not known that the DNS server for the host C42 is DNS server 41, successive inquiries are made within the network to higher DNS servers (i.e., root DNS).

In addition, in the embodiment described above, the translated IP address that is assigned to the terminal by the radio sever is of course translated to a global IP address in the firewall during the address resolution, but the translated IP address assigned to the terminal by the radio server can be a global IP address.

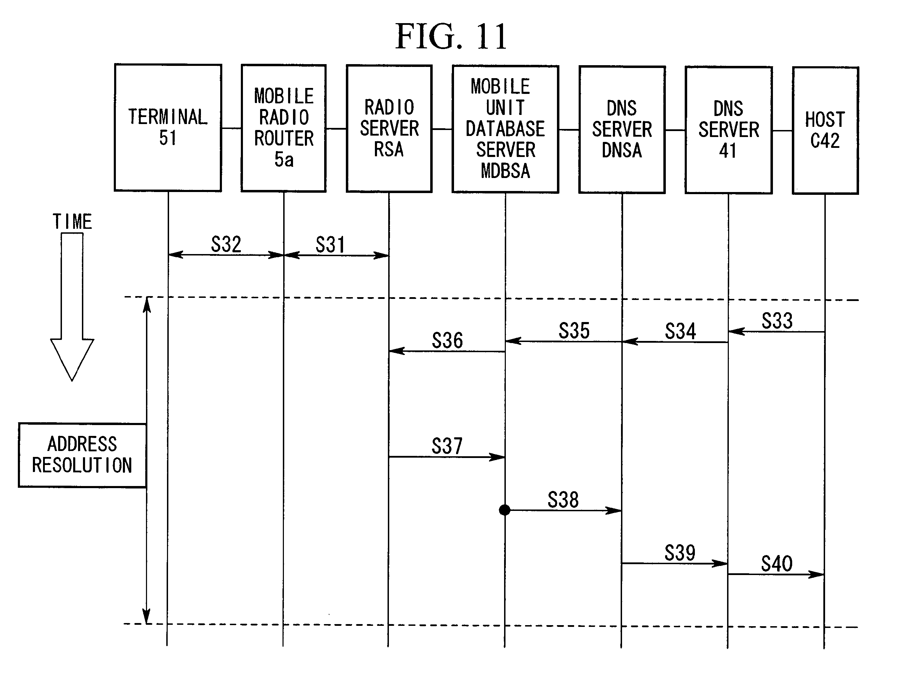

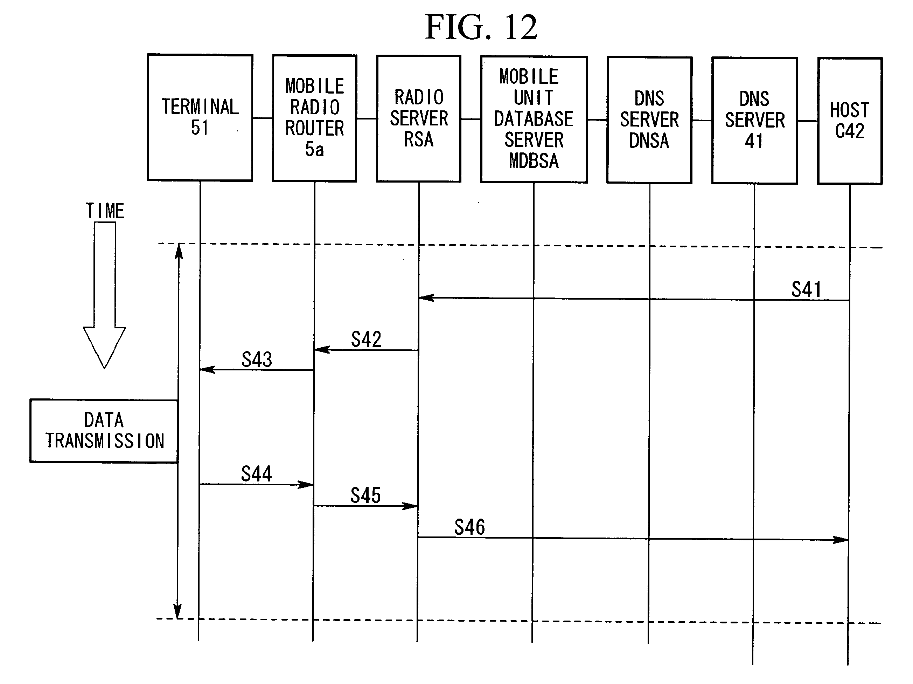

Next, a case of transmitting sending data from host C42 to terminal 51 using the system structure described above will be explained with reference to the flowcharts in Figures 11, 12. In this case, it is assumed that host C42 is aware of FQDN of terminal 51. It is also assumed that host C42 is aware that the subnetwork that manages terminal 51 is subnetwork A.

First, the process of address resolution of FQDN of terminal 51 will be explained with reference to Figure 11. As in the operations described above, processes of registration and authentication are carried out between the mobile radio router 5a and the mobile server RSA, and between the terminal 51 and the mobile radio router 5a (step S31, 32). In this case, the process is the same as that shown in Figure 8.

Host C42 sends FQDN of terminal 51, which is the target of address resolution operation, the IP address of host C42 and an address resolution request to DNS server 41 (step S33).

DNS server 41 sends the address resolution request of FQDN for terminal 51 to DNS server DNSAby designating the IP address of host C42 as the original client (step S34). DNS server DNSA sends the address resolution request for FQDN of terminal 51 by designating the IP address of host C42 as the original client to mobile unit database server MDBSA(step S35).

In the mobile unit database server MDBSA, the mobile radio router that controls the terminal 51 is the mobile radio router 5a using the FQDN of the terminal 51, and detects that the radio server presently connected to the mobile radio route r is the radio server RSAbased on the mobile FQDN of the mobile radio router 5a, and at the same time, detects the IP address of the terminal 51. In addition, the mobile unit database server MDBSA sends to the radio server RSA a mobile node information request that sets the IP address of the host C42 as the address resolution request source and sets the IP address of the terminal 51 as the address resolution destination (step S 36).

When the radio server RSA receives the mobile node information request, it searches the mobile unit managing database 34 based on the IP address of the terminal 51 what is the address resolution destination, and confirms that terminal 51 is presently connected to the radio server RSA. In addition, the radio server RSA transl ates the IP address of the terminal 51 received from the mobile unit database server MDBSA to the IP address of network A, and sends this translated IP address to the mobile unit database server MDBSA as the mobile node information response (step S 37). This translated IP address is a currently usable IP address assigned by the radio server RSA in a range of the IP address of the network A set in advance by the radio server RSA. Furthermore, the mobile unit database server MDBSA sends to the DNS server DNSA the received mobile node information response as the address resolution response (step S 38).

DNS server DNSA, upon receiving the address resolution response, sends the translated IP address of the terminal 51 assigned by the radio server RSA to DNS server 41 that requested address resolution as the address resolution response (step S39).

DNS server 41, upon receiving the address resolution response, sends the translated IP address of the terminal 51 to the host C42 that made the address resolution request as the address resolution response (step S40).

Host C42 is thus able to resolve the IP address of terminal 51.

By following the procedure described above, host C42 is able to transmit sending data to terminal 51. Accordingly, it becomes possible to transmit sending data to, for example, information collection storage apparatus used in PC, PDA, telematix that may be connected to the mobile radio router 5a, and terminals such as controllers used in remote automated inspection equipment.

Next, the process of transmitting sending data will be explained with reference to Figure 12.

Host C42, using the translated IP address of the terminal 51 obtained according to the above process, sends a packet, designating the translated IP address of terminal 51 as the destination and the IP address of host C42 as the original sender, to radio server RSA (step S41).

The radio server RSA refers the mobile unit managing database 34 based on the translated IP address of the terminal 51 that is the transmission destination of the packet transmitted from the host 42 in order to find the IP address of the terminal 51 received form the mobile unit database server MDBSA. The so found IP address is set as the transmission destination, and transmitted to the mobile radio router 5a by the radio server RSA (step S 42). Because the transmission destination of the packer received from the radio server RSA is the IP address of the terminal 51, the mobile radio router 5a transmits the packet having the IP address of the of the host C42 as the sender to the terminal 51 (step S 43). Due to the above processing, the packet is transmitted from the host C42 to the terminal 51 address.

A packet has thus been sent from the host C42 to the terminal 51.

Terminal 51, upon receiving the packet from mobile radio router 5a, sends a reception confirmation response to host C42 (step S44). By so doing, the reception confirmation response is sent to host C42 by way of the mobile radio router 5a and radio server RSA.(steps S45, 46).

Next, a case of system operation when a radio communication group 5 that has been operating inside the network A travels to network B will be explained.

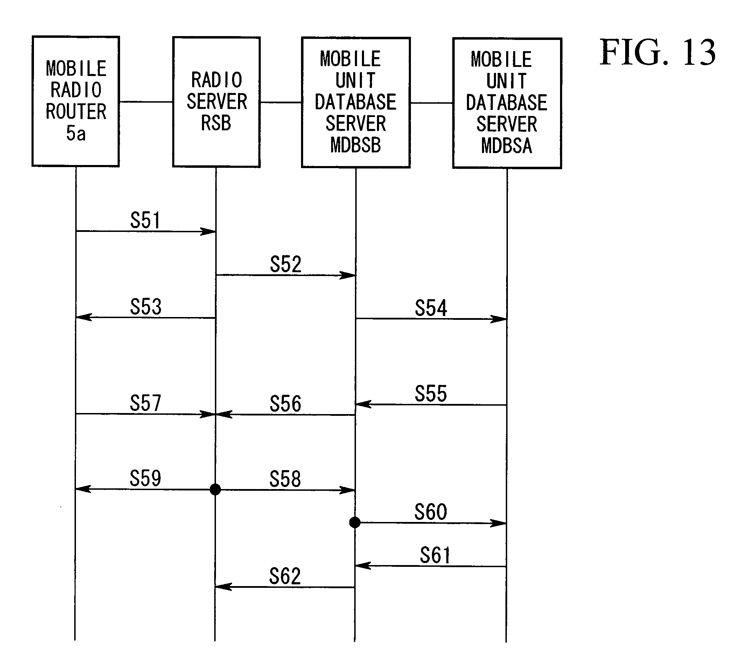

Figure 13 is a flowchart for the process of setting an IP address in the communication system 5.

First, after the radio communication system 5 of mobile radio router 5a travels to the communication area of radio server RSB, authentication process takes places between mobile radio router 5a and radio server RSB. In this case, as described in steps S1∼S3 in Figure 8, the registration request that sets the identifier of the mobile radio router 5a is sent to the radio server RSB from the mobile radio router 5a (step S 51), the identifier of the mobile radio router 5a, the random value generated by the radio server RSB itself, the FQDN of the radio server RSB, and the authentication request are sent to the mobile unit database server MDBSB from the radio server RSB (step S 52), and the identifier of the mobile radio router 5a, the random value that the radio server RSB generates itself, and the authentication request are transmitted to the mobile radio router 5a (step S 53).

When the mobile unit database server MDBSB detects that it is not managing the mobile radio router 5a, it sends the authentication request tha t includes the identifier of the mobile radio-router 5a, the random value, and the FQDN of the radio server RSB to another mobile unit database server MDBSA (step S54).

The mobile unit database server MDBSA, upon receiving the authentication confirmation request from mobile unit database server MDBSB, because the mobile radio router 5a and terminals 51∼5n are under its control, sends an authentication confirmation response, including the identifier for mobile radio router 5a and the identifiers for terminals 51∼5n to the other mobile unit database server MDBSB (step S55). Upon receiving the authentication confrmation response, when the mobile unit database server MDBSA receives the authentication request from the mobile unit database server MDBSB, it detects that it is managing the mobile radio router 5a itself based on the identifier of the mobile radio router 5a, it sends to the mobile unit database server MDBSB the authentication response that includes the identifier of the mobile radio router 5a, the calculation result calculated using the received random value, a mobile FQDN (for example, mur5a.mdbsa.networka.rsb.networkb) of the mobile radio router 5a that is synthesized from the FQDN (for example, mur5a.mdbsa.networka) of the mobile radio router 5a and the FQDN (for example rsb.networkb) of the radio server RSB, a network address necessary for the mobile radio router 5a to assign the IP addresses to the terminals 51, 52, ..., 5n, the IP address that it synthesizes itself from the network address and the identifier of each of the terminals 51, 52, ..., 5n, and information indicating that it is managing the mobile radio router 5a itself (step S 55). In addition, the mobile unit database server MDBSB sends to the radio server RSB the authentication response received from the mobile unit database server MDBSA (step S56).

In contrast, the radio server RSB receives from the mobile radio router 5a the identifier of the mobile radio router 5a and the calculation results that the mobile radio router 5a calculates based on the this identifier and the transmitted random number (step S 57). In addition, in the case that there are no problems in the confirmation of the search result of the identifier and the confirmation result of the identifier that does not refer to the two calculation results and the calculation results agree, the radio server RSB sends the registration completion notification, the request for security information, and the identifier of the mobile radio router 5a to the mobile unit database server MDBSB (step S 58), and sends further the IP address that the radio server RSB assigns itself and the identifier of the mobile radio router 5a to the mobile radio router 5a (step S 59). In the case that there is a problem in the search result-of the identifier and the reference of the calculation result, instead of the registration completion notification, a notice indicating that registration has not been allowed is sent to the mobile unit database server MDBSA via the mobile unit database server MDBSB along with the identifier of the mobile radio router 5a (step S 58, S 60), and the registration rejection is sent to the mobile radio router 5a.

In addition, the mobile unit database server MDBSB sends to the mobile unit database server MDBSA the received registration completion notice, the security information request, and the identifier of the mobile radio router 5a (step S 60), and when the mobile unit database server MDBSA receives the registration completion notice, the security information request, and the identifier of the mobile radio router 5a, the security information and the identifier of the mobile radio router 5a are sent to the radio server RSB via the mobile unit database server MDBSB (steps S 61, S 62). Due to the above sequence, even in the case that the mobile radio router 5a moves into a communication area of the radio server RSB which is outside the communication area of the radio server that is controlled by the mobile unit database server MDBSA, which is the home mobile unit database server, communication can still be carried out.

In the above embodiment, mobile unit database server MDBSB was able to deduce the home mobile unit database server for mobile radio router 5a and terminals 51∼5n by sending an authentication request to the mobile unit database server MDBSA. However, if a home radio server cannot be deduced even after sending an authentication request to the mobile unit database server MDBSA, it is possible to deduce a home mobile unit database server by successively inquiring to other mobile unit database servers MDBSn.

There are other procedures for deducing a home mobile unit database server from the mobile unit database server MDBSB in addition to the successive inquiry approach described above. Such methods may include a process of deducing a home mobile unit database server by providing a communication system managing server M-DNS that stores all the home radio servers of the mobile radio routers on the network, and carrying out an authentication confirmation request based on the mobile unit database server MDBSB in this communication system managing server M-DNS.

Next, a method of charging will be explained. This example relates to the case of one user having a mobile radio router 5a and a plurality of terminals, and charging is related to charging the fee for using the communication lines for the terminals.

A charging method is based on a pre-determined fee of A$ and n terminals, and the user is billed at pre-determined intervals in such a way that the charge will not exceed (A*n)$. For example, suppose A is $10 and n is 3, then a fixed amount not exceeding 3*10=30 $ is billed on a monthly basis to the user of mobile radio router 5a through the terminals. Also, this charging method may reduce the fixed charge as the number of terminals increase.

Next, another method of charging will be explained. In this example, the mobile radio router 5a is placed in a mobile transporter so that passengers having terminals connect the terminals to the mobile radio router 5a.

In this case, communication section 53 of the mobile radio router 5a is provided in each seat for the passengers.

The passenger can carry out wired or wireless short-range communication, and sends IP packets using own IP address (local, global) while traveling around in the transporter.

The charges arising from the use of the lines by the passengers for data sending and receiving may be provided free as a service, so that the charging may be based on a group rate that may be reduced. For example, if the number of connectable terminals is determined by the number of communication sections 53 provided in individual seats, charges may be based on the number of seats.

Accordingly, services that can be used to offer to the passengers connecting to the terminals installed in a mobile radio routers 5a in a transporter include, in the case a bus for example, local information (town and civic information) and digital -coupons and the like from merchants, so that the communication system can be used to offer attrac tive information in highly public locations to provide a device of regional promotion.

Other potential services include, when the transporter is a taxi, ID numbers which may be issued instead of IP addresses. An ID number can be verified separately from another location to reserve a taxi.

In such a case, by reserving a taxi from within a train, a taxi may be made available immediately upon arrival on the last train of the night without waiting in a long line. In such a case, even if the connection between the mobile radio router 5a and the terminal is wireless, by using infra-red radiation that is transmitted directly, it is possible to not interfere with other passengers by carefully considering the positional relation of seat, connector and people.

It should be noted that the radio base station and radio server may be integrated into one unit, or the connection may be through ISDN (integrated service digital network) or other wired lines. Radio stations and radio servers may be connected by radio signals.

In the above embodiment, when moving between networks, it is possible to provide an area managing function to the mobile unit database MDBSB server so that radio servers under its control may manage current information on mobile radio routers and terminals connected to respective mobile radio routers. In such a case, when a mobile radio router and terminals enter into its own area, the mobile unit database server MDBSB is able to carry out tasks including inquiries and confirmation and data collection and storage, at the time of the registration and authentication process, to a mobile unit database server MDBSA serving as the home mobile unit database server. Notification to the home mobile unit database server can also be made every time data are renewed.

In addition, a fixed IP address can be assigned to each of the terminals.

Also, management of mobile units may be carried out by recording a program to perform the task functions of the mobile unit managing section 62 in Figure 2, the control section 32 in Fig. 4, and the control section C52 in Figure 6 in a computer-readable recording medium and loading the program into a computer system to execute the functions. Here, the term "computer system" includes hardware such as OS and peripheral devices.

Also, if the "computer system" utilizes the www system, "computer system" is meant to include home-page environment (or display environment).

Also, computer-readable recording medium includes portable recording media such as flexible disk, opto-magnetic disk, ROM, CD-ROM, and recording apparatus such as hard disk contained in a computer system. Computer-readable recording media further includes those components that stores programs for transitory periods in a dynamic manner through networks such as the Internet or telecom lines that transmit the programs, as well as servers and internal volatile memories operating inside computer systems as clients that store programs for a limited duration. Such programs may perform a part of the described func tions, or may be operated in conjunction with pre-recorded programs stored in computer systems.

Although the embodiments were explained with reference to the drawings; but the specific structures are not limited to those described in the embodiments, and may include designs that are within the scope of the present invention.

In the following, a radio communication system in another embodiment of the present invention that includes a vehicle-mounted router representing the mobile radio router will be explained with reference to the drawings.

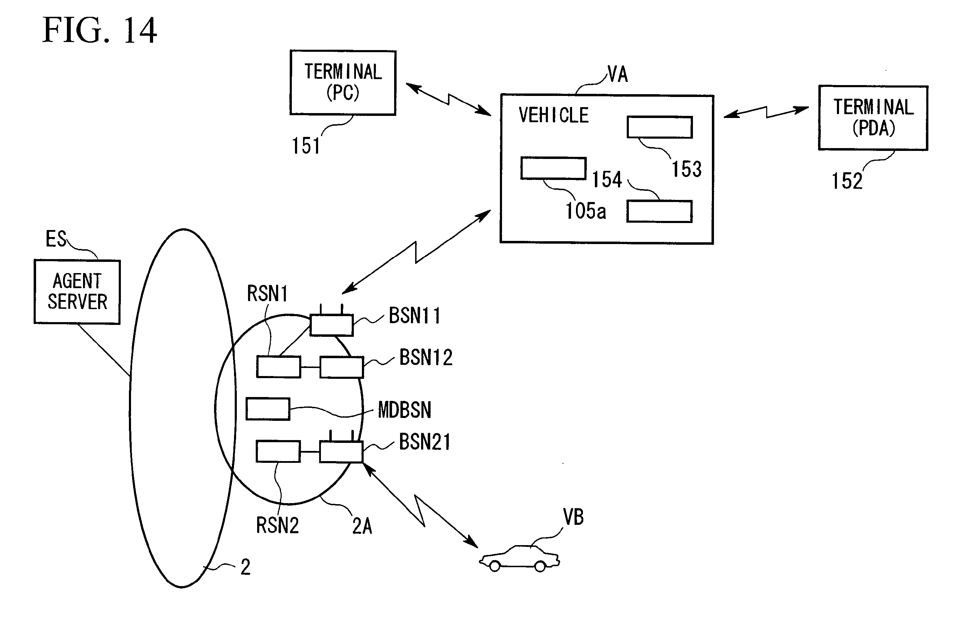

Figure 14 is a schematic block diagram to show the structure of the radio communication system and vehicle-mounted router in the embodiment.

In this diagram, ES relates to an agent server representing the host. A reference numeral 2 is a global network to which the agent server ES is connected. This global network 2 may be the Internet, for example. Reference numeral 2A relates to a radio network that has a function for managing mobile radios, and is connected to the global network 2.

With respect to the radio network 2A, as shown in Figure 14, the agent server ES that is the host on the global network is able to communicate directly, without using the gateway, with terminals under the control of a vehicle-mounted router 105a connected to the radio network 2A. It should be noted that the communication system shown in Figure 14 may be applied to a system that connects to the Internet through conventional portable phone networks that operate through gateways.

Also, a plurality of radio networks other than the radio network 2A may be created, as necessary, and connected to the global network 2.

Mobile unit database server MDBSN is connected to radio network 2A, and manages information on which radio communication group is connected to which radio server (details will be explained later). Also, mobile unit database server MDBSN manages identifiers and IP addresses of radio server RSN1, radio base stations BSN11, BSN12, radio server RSN 2, radio base station BSN21, all of which are under its control.

It is permissible to have a plurality of mobile unit database server MDBSN within the radio network 2A. When there are a number of radio networks, at least one mobile unit database server is-provided for each radio network.

Radio servers RSN1, RSN2 are provided in the radio network 2A, and include a function for connecting to network 2A. Radio server RSN2 has a similar construction to radio server RSN1. Further, a plurality of radio servers RSN1, RSN2 may be provided, as necessary, within the radio network 2A.

Radio base stations BSN11∼BSN12, radio base station BSN21 are connected, respectively, to radio server RSN1 and radio servers RSN2. One or a plurality of such radio base stations may be connected to one radio server. In this one example, the radio server RSN1 has two radio base stations BSN11, BSN12 connected thereto, and the radio server RSN2 has one radio base station BSN21 connected thereto.

Vehicle-mounted router 105a is disposed in a vehicle VA, and is connected to at least one or more terminals 151∼15n by means of wires or radio signals. Also, the vehicle-mounted router 105a provides Internet-based communication between the terminals under its control and a host on the global network, or terminals controlled by other vehicle-mounted router. That is, the vehicle -mounted router 105a has a function to transfer IP packets according to Internet protocol and to route the packets according to address information on the IP packets so as to transfer packet s between its own terminal and terminals controlled by a host or other vehicle-mounted routers, as well as with a host on the global network, or other terminals under its own control. Address information relates to information for identifying a party desi gnated as the receiver, and represents such information as FQDN (Fully Qualified Domain Name) and IP addresses.

Among the terminals 151∼15n, terminal 151 represents a PC, terminal 152 a PDA (Personal Digital Assistant), terminal 153 a GPS (Global Position ing Systems), and terminal 154 a control-system information input/output apparatus, for example.

For vehicle-mounted router 105a and terminals 151∼15n, the mobile unit database server MDBSN connected to the radio network 2A serves as the home mobile unit database server.

Incidentally, in addition to the vehicle VA, there are a many other vehicles having a vehicle-mounted router that are connected to a plurality of terminals, but vehicle VB having a vehicle-mounted router is shown in this diagram, as one example. The vehicle-mounted router provided for the vehicle VB is connected to radio server RSN2 through the radio base station BSN21.

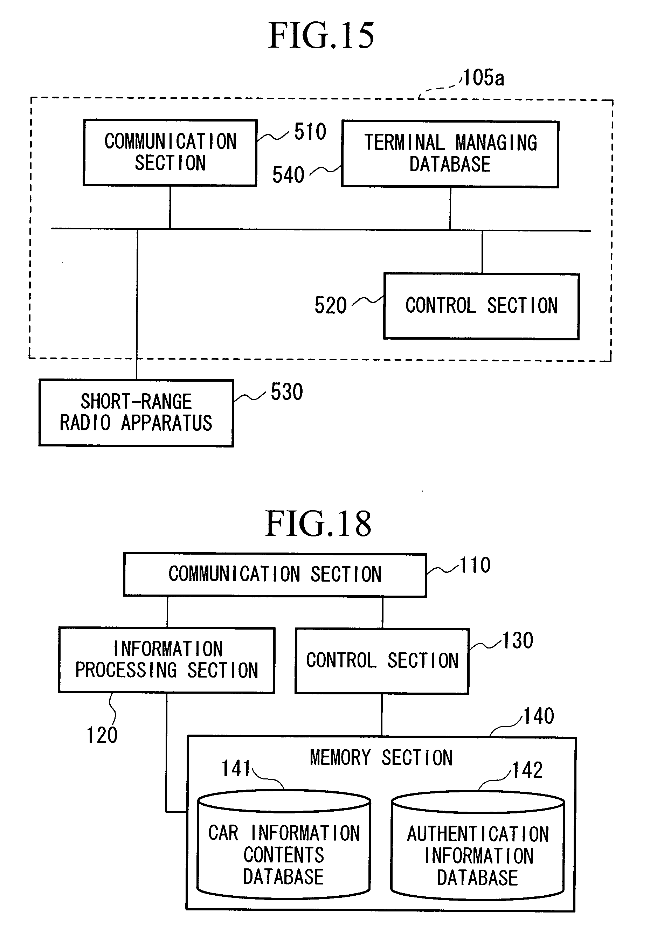

Next, the vehicle-mounted router 105a will be explained in more detail with reference to Figure 15. Figure 15 is a schematic block diagram to explain the operation of the vehicle-mounted router 105a.

In this diagram, control section 520 provides control action for the host on the global network and terminals that process communication data through the communication section 510 by routing the IP packets sent from the terminals to the host or other terminals controlled by other vehicle-mounted routers, while for the IP packets received from the host on the global network and terminals controlled by other vehicle-mounted routers are sent to respective terminals of the intended destinations. Similarly, control section 520 controls sending and receiving of IP packets among the terminals that are under its own control. In addition, the control unit 520 carries out authentication processing in which it searches for identifiers of the terminals stored in advance depending on the registration request from the terminal under its control, and enables communication in the terminal. However, in the case that the terminal cannot connect with itself, security of the communication is guaranteed by rejecting the registration. Furthermore, in the case that the vehicle -mounted router 105a moves and connects via a radio base station to a radio server that has a different radio server tha n the radio server it has been connected to up to this time, the control section 520 carries out its own registration request in a radio server at the mobile destination, and continuing communication is enabled.

Here, communication data relate to information-system data and/or control-system data. Information-system data, in the context of this example, relate to data communicated through subsystems for the purpose of providing entertainment or route information for the driver and passengers such as car audio, CarNavi data, as well as to data exchanged within the vehicle-mounted networks that connect the subsystems to each other. On the other hand, control-system information relate to data communicated through subsystems, that are constituted by a plurality of processors, including sensor information, as well as to data exchanged within the vehicle-mounted networks that connect the subsystem to each other.

Communication section 510 enables the terminals 151∼15n under its control to communicate, according to IP protocol, with the host on the global network or with terminals under control of other vehicle -mounted router. That is, communication section 510 carries out routing of IP packets according to IP addresses of receivers and sends IP packets to a target host on the global network or terminals under control of other vehicle-mounted router (for example, agent server), and receives IP packets sent from the host on the global network or terminals controlled by other vehicle -mounted router. Similarly, communication section 510 enables the terminals under its control to send and receive IP packets to each other. Communication devices refer to any combination of communication section 510 and control section 520.

In such a system, communication section 510 sends and receives IP packets using FQDN or IP address assigned to individual terminals 151∼15n or the host on the global network or IP addresses set in individual-terminals under control of other vehicle-mounted router.

Vehicle-mounted router 105a and any one of the terminals 151∼15n are generally connected by wired lines such as Ethernet ®, but it is possible to have wireless connections. When using a radio method, a short-range radio apparatus 530 may be provided in the communication section 510. The short-range radio apparatus 530 utilizes radio communication techniques such as wireless LAN or Bluetooth, for example. Bluetooth refers to a short -range communication technique using 2.4 GHz band. In this example, vehicle-mounted router 105a and individual terminals 151∼15n are connected through a short-range radio apparatus 530. Short-range radio apparatus 530 provides routing of IP packets received from the host on the global network or terminals under control of other vehicle-mounted router according to their IP addresses to terminals 151∼15n that are under its control, and receives communication data sent from terminals 151∼15n under its control to be delivered to the host on the global network or terminals controlled by other vehicle-mounted router.

Terminal managing database 540 associates own identifiers with IP address assigned by the radio server as information related to the vehicle-mounted router 105a itself, and stores the number of registered terminals to be managed. Also, terminal managing database 540 associates information related to the terminals such as identifiers, IP addresses assigned by the vehicle-mounted router based on information from the home mobile unit database server, and registration status (has been registered or not).

Here, even when the vehicle-mounted router 105a travels to another zone of radio base stations, if the radio server that manages the radio base stations in the relocated zone is the same as before, renewing of registration authentication is not required and communication can be continued without interruption.

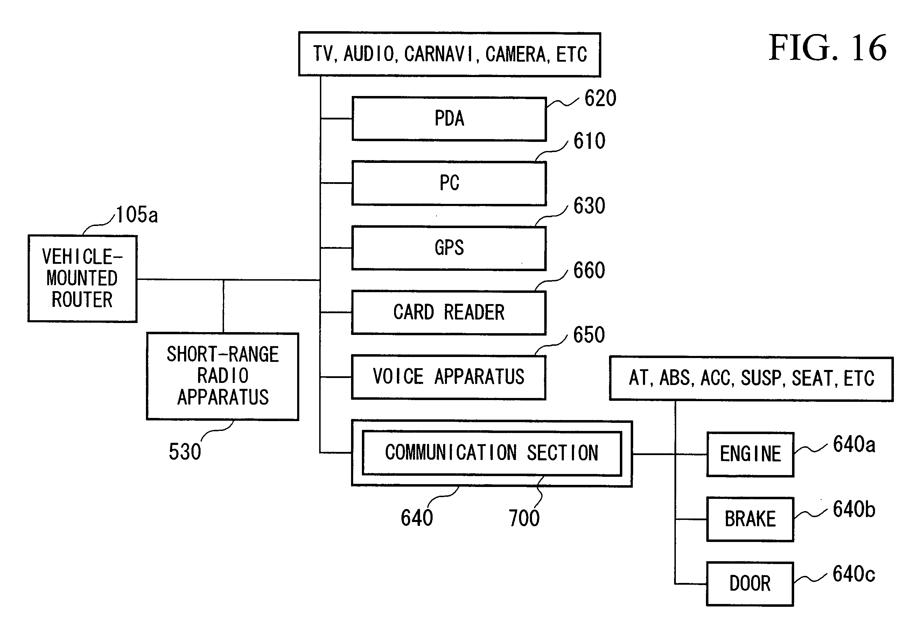

Next, radio communication groups will be explained with reference to Figure 16. Figure 16 is a schematic block diagram to explain the operation of communication groups. In this diagram, terminal 150 is represented by a PC 610, terminal 152 by a PDA 620, terminal 153 by a GPS 630 and terminal 154 by a control-system information input/output apparatus 640.

Terminals PC 610, PDA 620, GPS 530, control -system information input/output apparatus 640, voice apparatus 650, card-reader 660 are connected by wire or wirelessly (for example, short-range radio) to vehicle-mounted router 105a.

In this case, those terminals that need to be brought out of the vehicle, it is possible to carry out short-range radio communication, if they are located within a given distance from the vehicle-mounted router 105a.

Control-system information input/output apparatus 640 has a communication section 700 for receiving control-system data output from ICs (Integrated Circ uit) provided in the part of the vehicle VA such as engine 640a, brakes 640b, doors 640c, furthermore, for AT (automatic transmission), ABS (anti -skid braking system), ACC (air conditioning control), suspension, seat, and such control-system data received in the communication section 700 are sent to the vehicle-mounted router 105a. In this case, ICs provided in the engine 640a, brakes 640b, door 640c and the communication section 700 can communicate according to a control-system protocol network such as CAN (controller area network).

Also, the communication section 700 of the control -system information i/o apparatus 640, when the received control-system data is to be sent to the vehicle-mounted router 105a, has a capability to generate IP packets from the control-system data and sends the packets to the vehicle-mounted router 105a, and has a capability to generate control-system data from the IP packets received from the vehicle-mounted router 105a, and assign identifiers set in advance in the generated control-system data to engine 640c, brakes 640b, doors 640c, and sends the control data according to these identifiers.

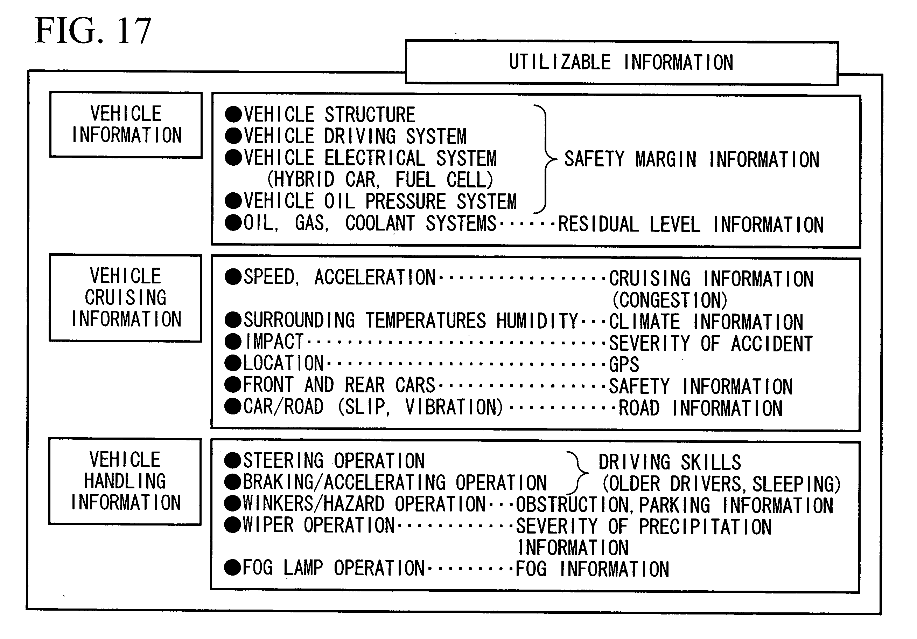

An example of the control-system data is shown in Figure 17. As shown in this diagram, control-system data include vehicle information, vehicle cruising information, vehicle handling information and the like. Vehicle information relates to information on vehicle body, but drive system, electrical system, hydraulic system are also utilized, in addition to mechanical information on body integrity, as safety margin information, while information on oil, gas, cooling water is utilized as residual quantity information.

Vehicle cruising information related to information on the status of a cruising vehicle, and, vehicle speed and acceleration are utilized as cruising information, and information such as ambient temperature and humidity is utilized as climate information.

Vehicle handling information relates to information on the status of vehicle operation being performed by the driver, and includes information such as steering operation, braking operation, accelerator operation which are utilized as measures for driver skill, and direction indicators and hazard indicators operations are utilized as obstruction and parking lot information.

It should be noted that these terminals are not limited to PC, PDA, GPS and control-system information input/output apparatus, so that, included are various devices having computing capabilities that are termed "wearable computers", and various information terminals (information that can be transmitted through IP networks such as various sensor information for a vehicle, data accessing point for showing operational status of household electrical appliances, and the like). For those devices that cannot perform IP packet transmission directly using sensors other than control-sensors, they may be connected to the vehicle-mounted router 105a through some interface for transmission of IP packet.

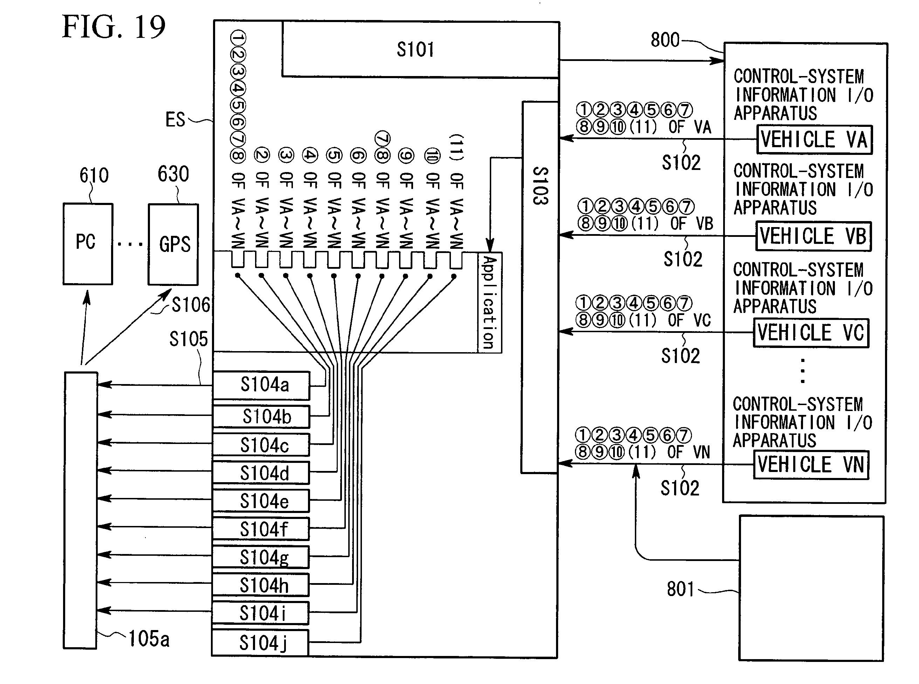

Next, agent server ES will be explained with reference to Figure 18. Figure 18 is a schematic block diagram to show the structure of the agent server ES. Communication section 110 is connected to global network 2, and communicates with individual terminals by way of radio servers connected to the radio networks, radio base stations and vehicle-mounted routers.

Information processing section 120 performs processing, such as statistical computation, of control -system data sent from the terminals of a plurality of vehicles, and generates car information contents which are stored in the car information contents database (referred to as contents DB herein below) 141 of memory section 140.

Control section 130 controls sending of car information contents stored in the contents DB 141 to the terminals connected to the host and v ehicle-mounted routers through the communication section 110. Car information contents are sent in response from the terminal side connected to the host and mobile radio routers, or when necessary, from the agent server ES side to the terminal side connected to the host and vehicle-mounted routers.

Also, the control section 130 authenticates the users and controls whether or not to allow communication according to information stored in the authentication information database 142 in the memory section 140.

Memory section 140 has contents DB 141 and authentication information database 142. Contents DB 141 stores car information contents processed by the information processing section 120. Authentication information database 142 stores authentication information used to establish communication between agent server ES and the terminals connected to the host and vehicle-mounted routers, and IP addresses or FQDN and identifiers for specifying the party to be connected.

Next, the operation of the radio communi ration system having the structure described above will be explained with reference to Figure 19. Figure 19 is a flowchart of the process of radio communication system. This example relates to a case of processing of control-system data sent from a plurality of vehicles, and sending to terminal 151. Also, it is assumed that IP addresses of the terminals connected to the vehicle-mounted routers of a plurality of vehicles are stored in the authentication information database 142 of the agent server ES. Also, in the control-system information i/o apparatus 640, it is assumed that, control -system information is generated from IP packets and IP packets are generated from control -system information.

First, with reference to the authentication information data base 142 for the terminals connected to the vehicle-mounted routers of a plurality of vehicles, control section 130 of agent server ES selects certain N-number control-system output apparatuses of vehicles VA∼VN grouped according to a specific rule such as the one shown by numeral 800, and calls up these control-system output apparatuses using the IP addresses stored in the authentication information database 142 (step S101) to request sending of control-system data. The call up process for vehicle VA, for example, is made by way of global network 2, radio server RSN1, radio base station BSN11, and vehicle-mounted router 105a.

Vehicle-mounted router 105a, upon receiving the-request for control -system data, temporarily holds the IP address of the agent server ES, which is the original sender, contained in the request, and answers the request for control-system data received from the agent server ES. Control-system information i/o apparatus 640, upon receiving request for sending control-system data, responds to the request for sending control-system data and sets the agent server ES as destination for the control -system data output from each CPU of the vehicles, and sends the control -system data as IP packets to the vehicle-mounted router 105a through the co ntrol-system information i/o apparatus 640. The control-system data sent in this instance include, as shown by numeral 801, ① current speed and acceleration of the vehicle; ② vehicle exterior and interior temperatures; ③ impact information; ④ location information; ⑤ distances to front and rear vehicles; ⑥ road/vehicle information (slip, vibration); ⑦ steering information; ⑧ braking, accelerating information; ⑨ winkers/hazard information; 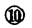 wiper information; and (11) fog-lamp information and others.

Vehicle-mounted router 105a, upon receiving IP packets addressed to agent server ES from the control-system information i/o apparatus 640, sends the IP packets to the agent server ES through the radio base station BSN11, radio server RSN1 and global network 2 (step S102).

Also, in this example, IP packetized control-system data are sent from the other vehicle VB to the agent server ES through a vehicle-mounted router of a vehicle VN.

Agent server ES temporarily stores packetized control-system data sent from each control-system output apparatus, and subjects the IP packetized control -system data to processing in the information processing section 120 (step S104a). For example, cruising information, obstacles information, blind spots information and the like a re prepared on the basis of speed/acceleration information, impact information, location information, front and rear vehicle distance information, road/vehicle information, steering information, braking and accelerating information contained in the control-system information. Also, on the basis of exterior and interior temperature information, climate information processing is performed to prepare information on climate conditions surrounding the cruising vehicle (step S104b). Also prepared are other car information contents such as accident severity information indicating the seriousness of accident happening to the vehicle on the basis of impact information, location information indicating the location of the vehicle on the basis of location information, and safety level information on the basis of distances to front and rear vehicles (step S104c). Further, location information processing (step S104d), safety information processing (step S104e), distance information processing (step S104f), driving skill information processing (step S104g), obstacles, parking information processing (step S104h), severity of precipitation information processing (step S104i) and fog information processing (step S104j) are carried out on the basis of location information, distances to front and rear vehicles, road/vehicle information (slip, vibration), steering information, braking, accelerating information, winkers/hazard information, wiper information and fog -lamp information.

When all the information processing is completed, agent server ES using the IP addresses, which are stored in the authentication information database 142, of individual terminals connected to the vehicle-mounted router, sends generated car information contents as IP packets to the terminals of PC, PDA, portable telephone, CarNavi and the like by way of global network 2, radio server, radio base station, and vehicle -mounted router (step S105, S 106).

Each terminal, upon receiving car information contents sent from the mobile radio router, outputs car information contents contained in the received IP packets. For example, of a plurality of terminals, PC 610 under the control of vehicle -mounted router 105a displays cruising information, obstacles information, blind spots information and the like on the screen. Also, voice apparatus 650, for example, performs conversion of cruising information to voice signals.

In this manner, it is possible to deliver selected information tailored to the needs of local regions on the basis of information sent from a plurality of terminals to individual terminals of vehicles.

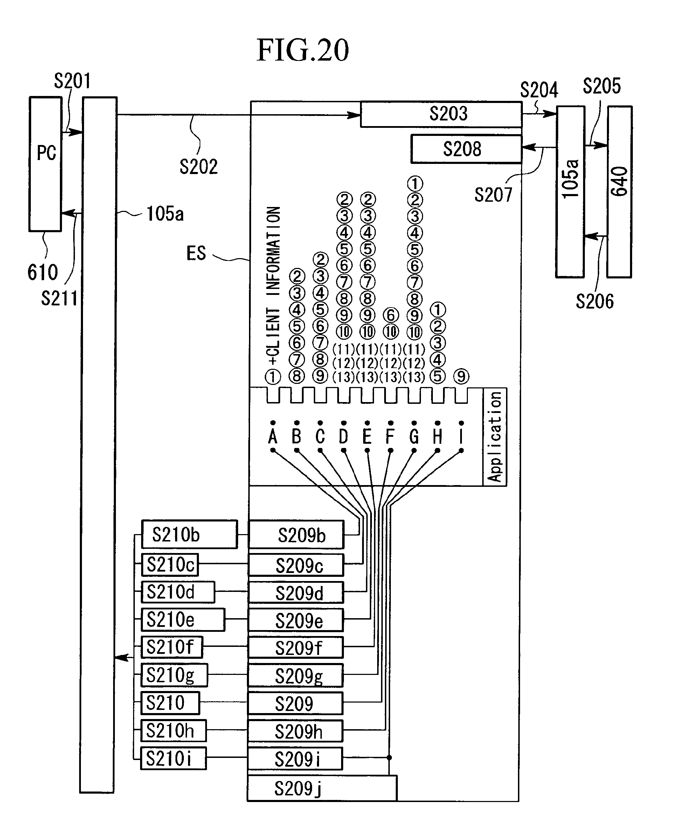

Next, a case of one terminal communicating with an agent server will be explained using the flowchart in Figure 20. This example relates to a case of making an external request using PC 610 connected to the vehicle-mounted router 105a to initiate remote monitoring of vehicle VA.

First, PC 610 sends information input by the owner of the vehicle to vehicle-mounted router 105a as IP packets including client information to identify the client, vehicle identifier address information to identify the vehicle, and remote monitoring request information to initiate remote monitoring of the vehicle (step S201).

Vehicle-mounted router 105a sends IP packets received from PC 610 that include client information, vehicle identifier address information and remote monitoring request information to agent server ES by way of radio base station, radio server and the global network 2 (step S202).

Agent server ES receives client information, vehicle identifier address information and remote monitoring request information sent from the vehicle -mounted router 105a, and subjects vehicle identifier address information and remote monitoring request information to user and vehicle authentication processing, using the information stored in the authentication information database 142 (step S203), and when authentication is established, sends control-system data sending request information to the control-system information i/o apparatus 640 so as to request the control -system data using the IP address of the control-system information i/o apparatus 640, which is under the control of vehicle-mounted router 105a, by way of the global network 2, radio server, radio base station, and the vehicle-mounted router 105a (step S204, S 205).

The control-system information i/o apparatus 640, upon receiving the control-system data sending request, responds to the request for control -system data sending request by sending control-system data addressed to agent server ES as IP packets to the vehicle-mounted router 105a (step S206). In this case, vehicle identifier address information, vehicle structural information, vehicle driving system information and vehicle electrical system information and the like are sent.

Vehicle-mounted router 105a sends IP packets to agent server ES by way of radio base station, radio server, global network 2 (step S207).

Agent server ES temporarily stores packetized control-system data sent from the vehicle-mounted router 105a (step S208), and, according to information contained in the control-system data, including: ① vehicle identifier address information; ② vehicle structural information; ③ vehicle driving system information; ④ vehicle electrical system information; ⑤ oil, gas, coolant system information; ⑥ speed/acceleration information; ⑦ vehicle exterior and interior temperature information; ⑧ impact information; ⑨ location information; 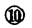 distances to front and rear vehicles information; (11) road/vehicle information (slip, vibration); (12) steering information; (13) braking, accelerating information and others, to perform a problem detection processing to generate information to examine questions such as whether or not the vehicle is being driven by a driver other than the owner (vehicle theft), damage sustained by the vehicle while the user is away, abnormal rise/drop in the vehicle interior/exterior temperatures and prepares owner alert information (step S209), and sends owner alert information as IC packets addressed to PC 610 to vehicle-mounted router 105a (step S210). Also, requester corn display access authorization processing (step S209b), diagnostic information filling processing (step S209c), car maintenance request formatting processing (step S209d), car safety, emergency rescue calling processing (step S209e), car insurance cost estimation processing (step S209f), driving skill filling processing (step S209g), car status information processing (step S209h), car location - and area-information linking processing (step S209i) and area-, weather-, road-, shopping- and database consulting address- information storing processing (step S209j) are carried out according to information ① to (13) to generate requester corn display apparatus address information (S210b), remote diagnostic information (S210c), car maintenance reservation information (S210d), car safety, emergency rescue information (S210e), car insurance cost information (S210f), safe driving support information (S210g), pre -trip checks information, safety margin, residual level information (S210h), local information, district, climate, road condition, shopping, accumulated information (S210i).

Vehicle-mounted router 105a sends IP packets containing owner alert information sent from agent server ES to PC 610 (step S211). PC 610 receives owner alert information contained in the IP packets sent from the vehicle-mounted router 105a, and displays the owner alert information on the screen. By so doing, the owner of the vehicle is able to determine what the state of the vehicle VA is from a remote lo cation.

Also, it is permissible to process control -system data sent from the control-system information i/o apparatus 640 into information other than the remote monitoring information described above to notify the terminal. For example, it is possible to process for filing a diagnostic information request so as to remotely determine the maintenance condition of a vehicle, based on information contained in the control-system data for the vehicle such as structural information, driving system information, electrical system information, oil, gas, coolant system information, speed/acceleration information, exterior and interior temperature information, and impact information, and send such remote diagnostic information to the terminal. It is also possible to send safe driving information based on real-time vehicle steering information and the like so as to offer advise for safer driving to the vehicle driver operating the vehicle currently.

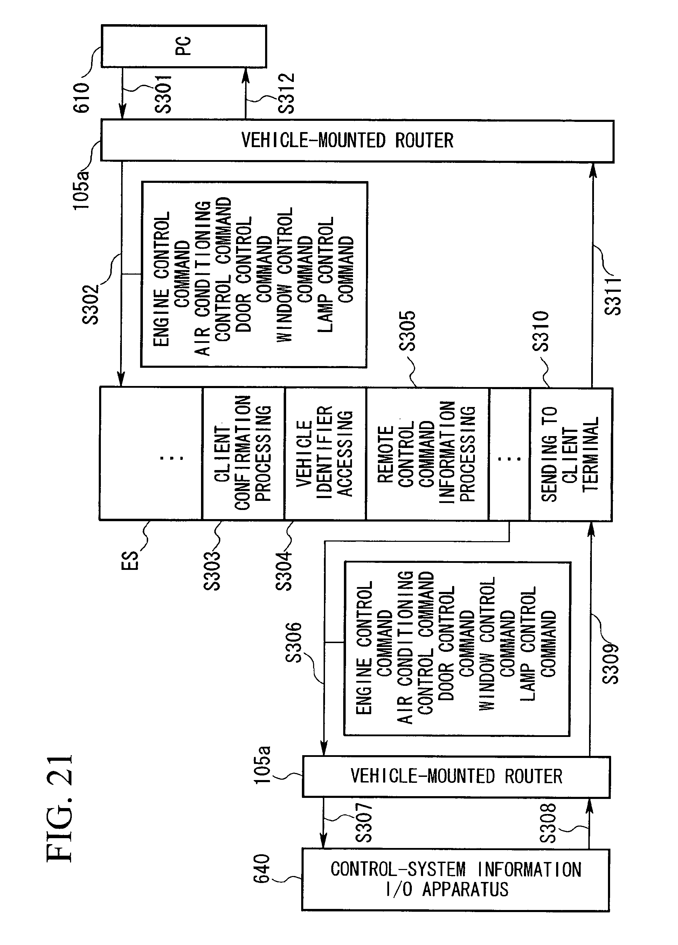

Next, in another embodiment, a case of performing remote control oper ation of a vehicle with improved security will be explained with reference to Figure 21.

PC 610 sends information entered by an owner of a vehicle addressed to agent server ES to the vehicle-mounted router 105a; such information may contain client information, vehicle identifier address information along with a remote control request on control items including: engine start/stop operation; air conditioning operation; door locking/unlocking operation; window opening/closing operation; lamp on/off operation and the like (step S301).

Vehicle-mounted router 105a sends client information and vehicle identifier address information and remote control request information to agent server ES by way of radio base station, radio server, global network 2 (step S302).

Agent server ES, upon receiving client information and vehicle identifier address information and remote control request information, performs client confirmation processing (step S303) and vehicle identity access processing (step S304), on the basis of received-data on client information, vehicle identifier address information and information stored in the authentication information database 142, and when authentication is established, performs remote control command information processing so as to remote control the vehicle according to the remote control request information (step S305), and sends remote control command information and control -system output apparatus access information to vehicle-mounted router 105a by way of network 2, radio server, radio base station (step S306). Here, the remote control command information includes commands including engine control, air conditioning control, door control, window control, lamp control to correspond to the remote control request information.

Vehicle-mounted router 105a sends control-system output apparatus access information and remote control command information sent from agent server ES to the control-system information i/o apparatus 640 (step S307).

Control-system information i/o apparatus 640, upon receiving control-system output apparatus access information and remote control command information sent from agent server ES, performs control of various sections of the vehicle according to the remote control command information. Then, when the control actions according to the remote control command information is completed, control action confirmation information to notify that control has been completed is sent to vehicle -mounted router 105a (step S308).

Vehicle-mounted router 105a sends control action confirmation information to agent server ES by way of radio base station, radio server, global network 2 (step S309).

Agent server ES stores control action confirmation information temporarily therein, prepares to send the information to the vehicle-mounted router 105a to send to the client terminal apparatus by way of global network 2, radio server, radio base station (step S310), and sends control action confirmation information to vehicle -mounted router 105a (step S311).

Vehicle-mounted router 105a sends control action confirmation information sent from agent server ES to PC 610 (stop S312). PC 610 displays control action confirmation information sent from the vehicle-mounted router 105a on the screen. The vehicle owner is thus able to find out the results of remote control request.

Accordingly, because the steps are arranged so that, control-system information i/o apparatus 640 of the vehicle is controlled after authenticating the remote control operator through server agent ES according to remo te control request information, the method is able to reduce incidences of unauthorized operation of the vehicle by a third party, thereby improving the security of remote control operation, comparing with a case of a remote control by using the control -system information i/o apparatus 640 and the remote control terminal operated by a remote operator.

As explained above, because information from a terminal located within a given distance from inside or outside a vehicle is sent from a radio network to a g lobal network using the Internet protocol, the present invention enables information to be sent to agent server ES.

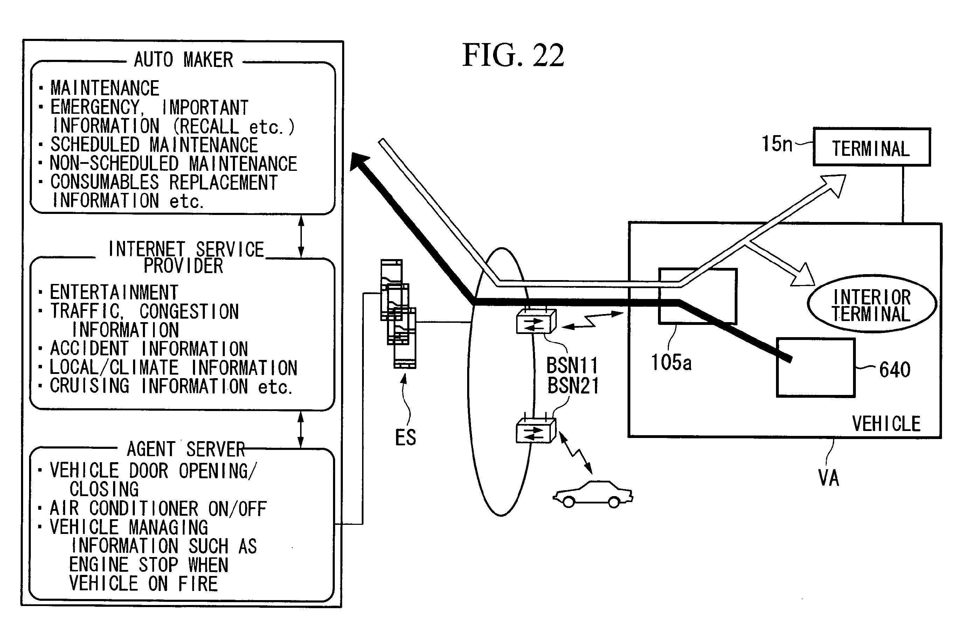

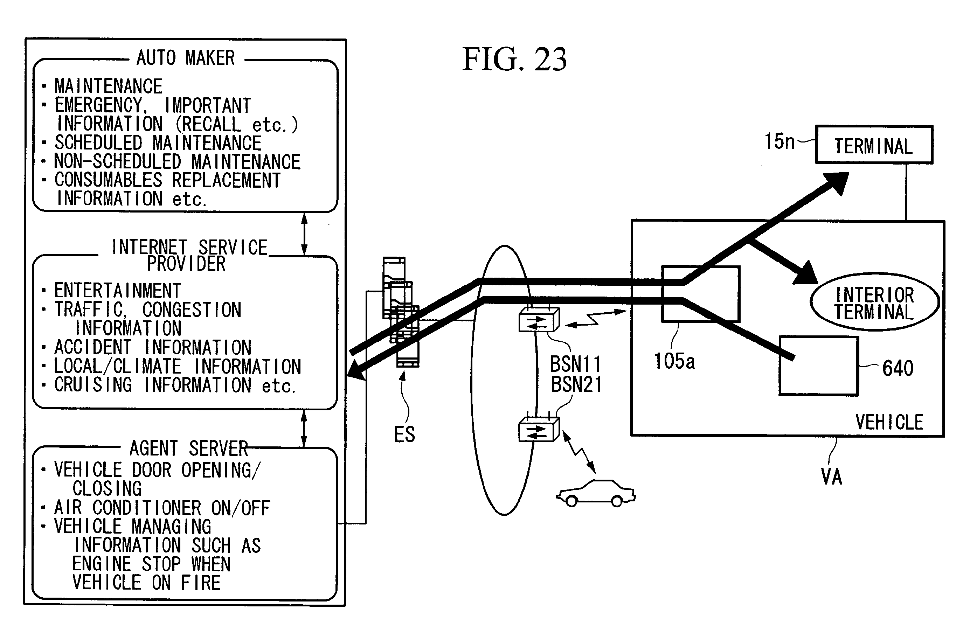

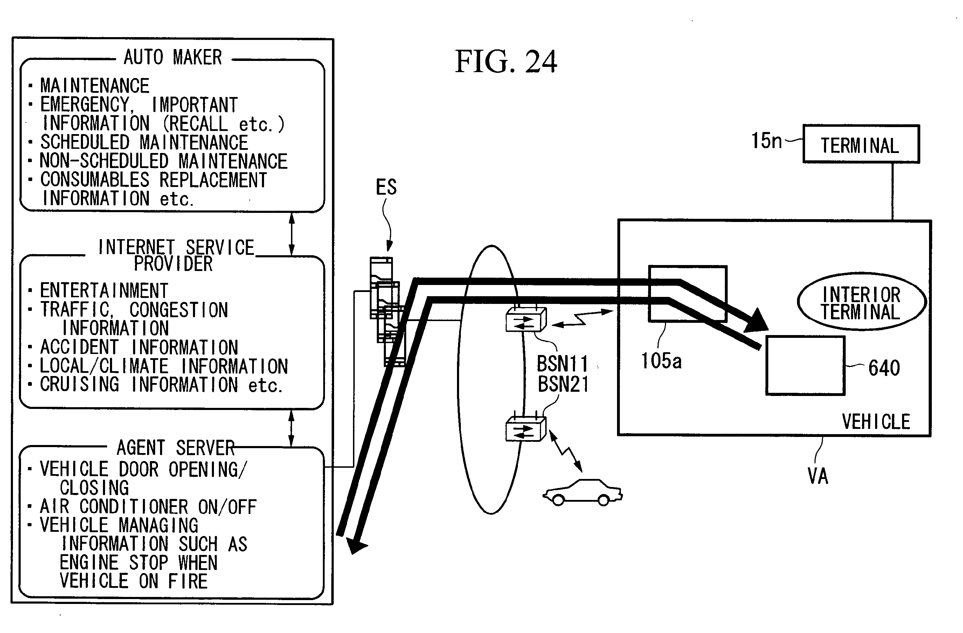

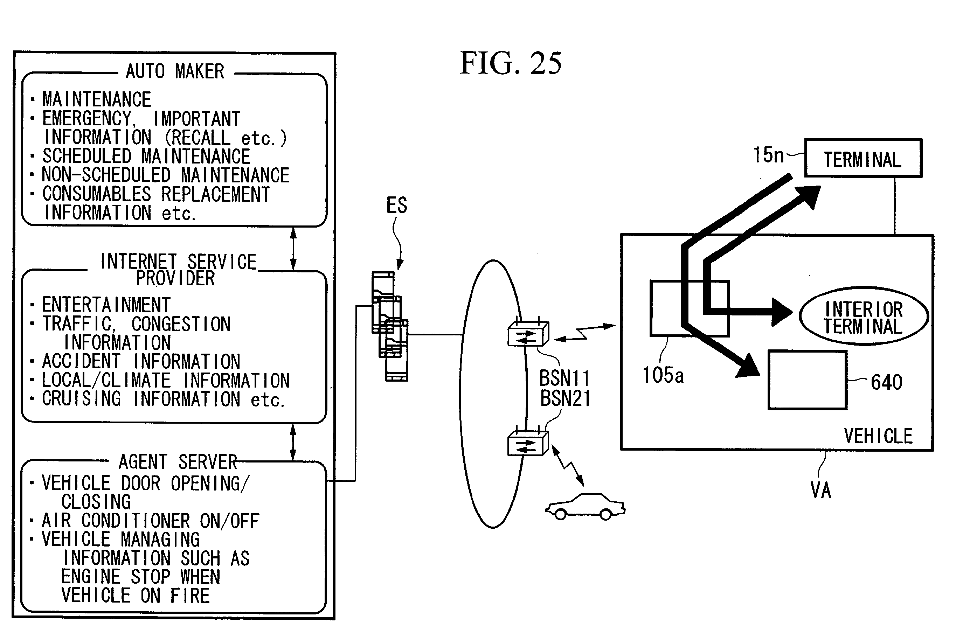

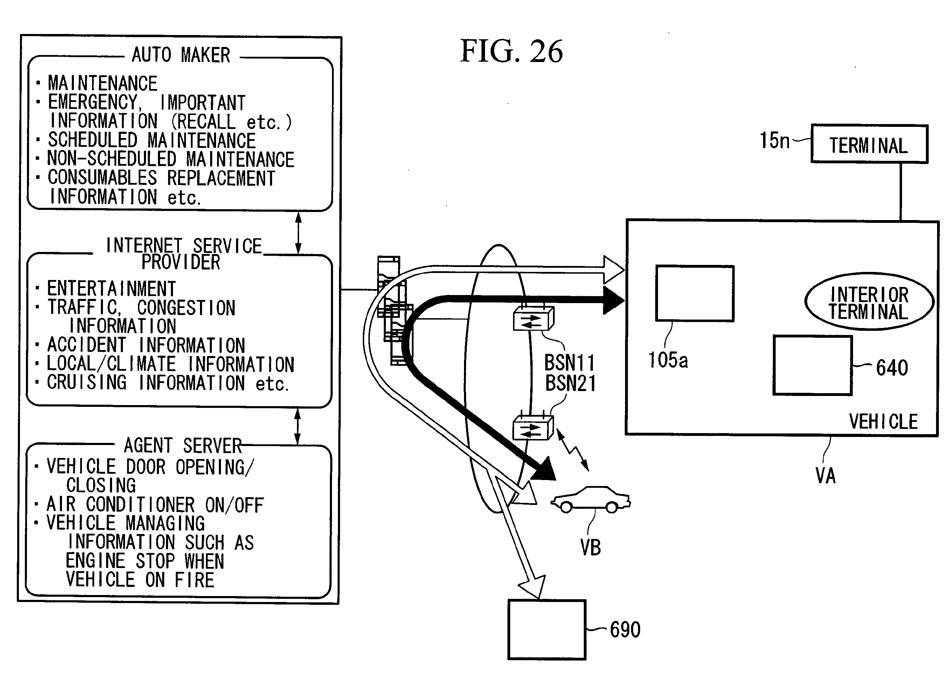

Also, in addition to embodiments described above, various-system of services may be offered between the terminals and agent server ES using the vehicle-mounted router 105a. The following is a list of some examples.
1. As shown in Figure 22, control-system data is sent from the control-system information i/o apparatus 640 to agent server ES through vehicle -mounted router 105a, and a server of an automaker is accessed from the agent sever ES to generate car information contents according to control -system data, and the car information contents thus generated are sent through the vehicle-mounted router 105a to a terminal inside a vehicle or an external terminal connected to the vehicle-mounted router 105a within a given distance.
2. As shown in Figure 23, in addition to connecting to a server of an automaker, an Internet service provider may be accessed so that contents of statistically manipulated data such as traffic information, congestion information, accident information, climate information, cruising information may be generated from control -system data output by the control-system information i/o apparatus 640, and sent to terminals connected to the vehicle-mounted router 105a.
3. As shown in Figure 24, control-system data are sent-from control-system information i/o apparatus 640 to agent server ES through vehicle -mounted router 105a, and using the remote operating functions of the agent server ES, control information is sent to the control-system information i/o apparatus 640 through the vehicle-mounted router 105a. For example, door operation and air conditioner operations may thus be conduction, as well as to prevent spreading of fire by turning off the engine.
4. As shown in Figure 25, a terminal external to a vehicle may communicate with a terminal inside the vehicle or with a control-system information i/o apparatus 640 through the vehicle-mounted router 105a.
5. A terminal in a vehicle VA having a vehicle-mounted router may communicate with a terminal in a vehicle VB having a vehicle-mounted router, thereby enabling the two terminals to remain in contact. In this case, as shown in Figure 26, even if the vehicle VB does not have a vehicle-mounted router, data may be sent to a communication device 690 capable of processing IP packets.

It should be noted that the mobile radio router 105a and the terminal may be combined into one unit. Radio base stations may be assembled into a radio server as a unit.

Also, in the above embodiments, IP addresses are assumed to be global IP addresses, but within a radio network, local IP addresses may also be utilized. In this case, NAT (network address translation) function should be provided in the firewall or radio servers.

Also, the functions of the control section-520 in the vehicle-mounted router 105a shown in Figure 15 or the information processing section 120 and control section 130 of agent server ES shown in Figure 18 may be realized by recording an application program in a computer-readable recording medium and loading the program into a computer system to execute the functions. Here, the term "computer system" includes hardware such as OS and peripheral devices.

Also, in the embodiments described above, the vehicle-mounted router 105a was connected to global network 2 through radio base station and radio server, but the function of a radio server may be provided in the mobile unit database server so that the vehicle-mounted router 105a may be connected to global network 2 by way of a radio base station and a mobile unit database server.

Also, if the "computer system" utilizes the www system, "computer system" is meant to include home-page environment (or display environment).

Also, computer-readable recording medium includes portable recording media such as flexible disk, opto-magnetic disk, ROM, CD-ROM, and recording apparatus such as hard disk contained in a computer system. Computer-readable recording media further includes those components that stores programs for transitory periods in a dynamic manner through global networks such as the Internet or telecom lines that transmit the programs, as well as servers and internal volatile memories operating inside computer systems as clients that store programs for a limited duration. Such programs may perform a part of the described functions, or may be operated in conjunction with pre-recorded programs stored in computer systems.

Although the embodiments were explained with reference to the drawings, but the specific structures are not limited to those described in the embodiments, and may include designs that are within the scope of the present invention.

## Claims

1. A communication system comprising:
at least one radio server connected to a network;
not less than one radio base station connected to the radio server; and
a mobile radio router that controls at least not less than one terminal and carries
out communication with said radio base station by radio transmi ssion; wherein, when it is necessary for a terminal under control of said mobile radio router to communicate with a terminal under control of another mobile radio router or a host connected to the global network, address resolution is enabled using-the IP address of the terminal under control of said mobile radio router.

2. A communication system comprising:
at least one radio server connected to a network;
not less than one radio base station connected to the radio server; and
a mobile radio router that controls at least not less than one terminal and carries
out communication with said radio base station by radio transmission; wherein, when a terminal under control of said mobile radio router relocates from said one network to another network connected to said global network, and needs to communicate with a terminal under control of another mobile radio router, or a host connected to the network, address resolution is enabled using the IP address of the terminal.

3. A mobile unit database server for use in a communication system comprising: at least one radio server connected to a network; not less than one radio base station connected to the radio server; and a mobile radio router that controls at least not less than one terminal and carries out communication with said radio base station by radio transmission; wherein the mobile unit database server is provided with
a mobile unit information database storing mobile unit information that associates identifiers and/or FQDNs and/or a mobile FQDN of said mobile radio router with the identifiers and/or FQDN and/or IP address of said terminal.

4. A mobile unit database server according to claim 3, wherein, when a terminal under control of the mobile radio router communicates with a host connected to a globa 1 network or a terminal under control of another mobile radio router, the terminal under the control of the mobile radio router, as a communication party specified by the host or by the terminal under the control of another mobile radio router, detects a radio server to which the terminal as said communicating party is connected by way of the mobile radio router according to mobile unit information stored in the mobile unit information database.

5. A mobile unit database server according to claim 4, wherein, when a terminal under control of the mobile radio router communicates with the host connected to the global network or the terminal under the control of another mobile radio router, the terminal as said communication party allows the radio server connected to this terminal to notify the host or the terminal under control of another mobile radio router about an IP address of the terminal as said communication party.

6. A mobile unit database server according to claim 3, wherein, when said mobile radio router issues an IP address to said terminal that is connected to this mobile radio router, the mobile unit database server that is the home of said terminal provides to said mobile radio router the address information necessary for said mobile radio router to issue the IP address to said terminal.

7. A mobile unit database server according to claim 4 or 5, wherein, when the terminal under the control of the mobile radio router communicates with the host connected to the global network or the terminal under the control of another mobile radio router, the IP address of the terminal as said communication party, of which said host or said terminal under the control of another mobile radio router is notified, is the IP address after being translated from the IP address, which is issued by said mobile radio router to said terminal under the control thereof, to the IP address system of the network to which said radio server that is presently connected to said terminal belongs.

8. A mobile radio router for use in a communication system comprising: at least one radio server connected to a network; not less than one radio base station connected to the radio server; and a mobile radio router that controls at least not less than one terminal and carries out communication with said radio base station by radio transmission; wherein the mobile radio router is provided with
a terminal managing database that stores the IP addresses of the terminal assigned by the mobile unit database server by associating the IP address of said terminal with an identifier of said terminal.

9. A mobile radio router according to claim 8, wherein- the IP address of said terminal is issued based on address information obtained from the home mobile unit database server of said terminal.

10. A mobile radio router according to-claim 8 wherein authentication of said terminal is carried out by searching said terminal managing database.

11. A mobile radio router according to claim 8 wherein, in the case that communication is carried out between a terminal under the control of said mobile radio router and a host connected to a global network or a terminal under control of another mobile radio router, the routing of the IP packet is carried out according to said IP address.

12. An accounting method used in a communication system that includes at least one radio server connected to a network; not less than one radio base station connected to the radio server; and a mobile radio router that controls not less than one terminal and carries out communication with said radio base station by radio transmission, wherein, in the case that a plurality of terminals are connected to said mobile radio router, discounted usage fees for the communication lines are implemented depending on the number of said connected terminals.

13. A method according to claim 12, wherein the fee for using communication lines is based on imposing a pre-determined amount of charge for a pre-determined time period.

14. A method according to claim 12 or 13, wherein when the pre -determined charge is A$ and the number of terminals is n, an amount of charging is less than (A*n)$ in the pre-determined time period.

15. A mobile unit managing program containing steps for execution of computing tasks in a communication system comprising: at least one radio server connected to a network; not less than one radio base station connected to the radio server; and a mobile radio router that controls at least not less than one terminal and carries out communication with said radio base station using radio transmission; wherein,
when a terminal under control of said mobile radio router communicates with a host connected to a global network or a terminal under control of another mobile radio router, the program includes the steps of:
the terminal under the control of the mobile radio router, as a communication party specified by the host or by the terminal under the control of another mobile radio router, detecting a radio server to which the terminal as-said communication party is connected by way of the mobile radio router by using a managing information database that contains identifiers and/or FQDN and/or mobile FQDN of said mobile radio router associated with identifiers, FQDN, or IP addresses of the terminals, and stored as mobile unit information; and
the terminal as said communication party allowing the radio server connected to this terminal to notify said host or terminal under the control of another mobile radio router about the IP address of the terminal as said communication party.

16. A computer-readable recording medium having recorded programs for executing computing tasks in a communication system comprising: at least one radio server connected to a network; not less than one radio base station connected to the radio server; and a mobile radio router that controls at least not less than one terminal and carries out communication with said radio base station by radio transmission; wherein,
when a terminal under control of the mobile radio router communicates with a host connected to a global network or a terminal under control of another mobile radio router, the program includes the steps of:
the terminal under the control of the mobile radio router, as a communication party specified by the host or by the terminal under the control of another mobile radio router, detecting a radio server to which the terminal as said communication party is connected by way of the mobile radio router by using a managing information database that contains identifiers and/or FQDN and/or mobile FQDN of said mobile radio router associated with identifiers, FQDN, or IP addresses of the terminals, and stored as mobile unit information; and
the terminal as said communication party allowing the radio server connected to this terminal to notify said host or terminal under the control of another mobile radio router about the IP address of the terminal as said communication party.

17. A radio communication program containing steps for execution of computing tasks in a communication system comprising: at least one radio server connected to a network; not less than one radio base station connected to the radio server; and a mobile radio router controlling at least not less than one terminal; wherein,
when the registration and authentication process of said terminal that is connected to said mobile radio router is carried out, a computer executes the steps of:
carrying out authentication based on information in the terminal managing database that stores the identifiers of said terminal, and assigning IP addresses to said terminal based on address information obtained from the home mobile unit database server of said terminal.

18. Acomputer-readable recording medium containing a radio communication program for executing computing tasks in a communication system comprising: at least one radio server connected to a network;-not less than one radio base station connected to the radio server; and a mobile radio router-controlling at least not less than one terminal; wherein,
when the registration and authentication process of said terminal that is connected to said mobile radio router is carried out, a computer executes the steps of:
carrying out authentication based on information in the terminal managing database that stores the identifiers of said terminal, and as signing IP addresses to said terminal based on address information obtained from the home mobile unit database server of said terminal.

19. A vehicle-mounted router for use in a communication system comprising: at least one radio server connected to a network; not less than one radio base station connected to the radio server; and a mobile radio router controlling at least not less than one terminal for communicating with the radio base station using radio signals; wherein
the vehicle-mounted router is provided with a communication device for routing IP packets between a terminal under control of the vehicle-mounted router and a host or a terminal under control of another vehicle-mounted router in such a way that the IP packets are transmitted according to the Internet protocol and routed according to address information associated with the IP packets, and
the communication devices are installed in the vehicle.

20. A vehicle-mounted router according to claim 19, wherein at least one terminal is a control-system information input/output apparatus.

21. Avehicle-mounted router according to claim 19, wherein the communication devices perform the routing of packets according to an IP address assigned to the terminal or the host or the terminal under control of another mobile radio router or the host.

22. A vehicle-mounted router according to claim 19, wherein the vehicle-mounted router is used in a communication system comprising at least one radio server, not less than one radio base station connected to the radio server, and a vehicle-mounted router that controls at least not less than one terminal and carries out communication with said radio base station using radio transmission.

23. A vehicle-mounted router according to claim 19, wherein the communication devices transmit only IP packets.

24. An agent server for use in a communication system comprising: at least one radio server connected to a network; not less than one radio base station connected to the radio server, a vehicle-mounted router according to claims 19 to 23 controlling at least not less than one terminal and connected to said radio base station by radio transmission; and the agent server connected to the network wherein the agent server is provided with:
an authentication information database having pre-recorded client authentication information for authenticating a connection client, and vehicle identifier address information for authenticating a vehicle having the vehicle-mounted router; and
control devices for performing an authentication process by receiving client information for identifying the connection client and vehicle identifier address information for identifying the vehicle which are sent from the terminal by way of said vehicle-mounted router, and by processing the received client information and vehicle identifier address information according to the client authentication information and the vehicle identifier address information contained in the authentication information database.

25. An agent server according to claim 23, wherein the agent server is provided with information processing devices that receive control-system data to show the status of the vehicle sent from the terminal by way of said vehicle-mounted router, and process the received control-system data and then generate car information contents.

26. A communication method by using a communication system comprising: at least one radio server connected to a network; not less than one radio base station connected to the radio server; a mobile radio router controlli ng at least not less than one terminal, and a vehicle-mounted router that controls not less than one terminal and carries out communication with said radio base station by radio transmission; wherein,
the vehicle-mounted router is mounted in a vehicle;
a terminal under control of the vehicle-mounted router and a host on a global network or a terminal under control of another vehicle-mounted router communicate with each other according to IP protocol; and, as necessary,
IP packets are generated from the communication data output from the terminal under the control of said vehicle-mounted router, the communication data is generated from the IP packets received from said host on the global network or the terminal under the control of another vehicle-mounted router, and thereby communication is carried out between the terminal under the control of said vehicle-mounted router and said host or the terminal under the control of another vehicle-mounted router.
